# EUROPEAN PATENT SPECIFICATION

(11) **EP 4 270 743 B1**
(45) Date of publication and mention of the grant of the patent: **06.05.2026**
(21) Application number: 21910043.5
(22) Date of filing: 16.11.2021
(51) Int. Cl.: H02K 13/00, H01R 39/26, H01R 39/40, H01R 39/60, H02K 9/06, H02K 5/20, H01R 39/38

(54) **ELECTRIC MOTOR**
ELEKTROMOTOR
MOTEUR ÉLECTRIQUE

(30) Priority: 23.12.2020 JP 2020213664
(43) Date of publication of application: 01.11.2023
(73) Proprietor: Panasonic Intellectual Property Management Co., Ltd., Kadoma-shi, Osaka 571-0057 (JP)
(72) Inventor: YOSHIOKA, Yuuki, Kadoma-shi, Osaka 571-0057 (JP)
(74) Representative: SSM Sandmair
(86) International application number: PCT/JP2021/041995
(87) International publication number: WO 2022/137890

(56) References cited:
- EP-B1- 2 396 870
- DE-A1- 102004 009 124
- JP-A- 2008 125 202
- JP-A- S50 114 514
- JP-A- S50 136 605
- JP-U- S5 825 565
- JP-U- S5 825 565
- JP-U- S60 117 675
- US-A- 2 802 960
- US-A1- 2009 230 813
- US-A1- 2016 240 990
- US-A1- 2020 112 133

## Description

### TECHNICAL FIELD

The present disclosure relates to an electric motor.

### BACKGROUND ART

Examples of the electric motor include a commutator electric motor with a brush and a brushless electric motor without a brush. In a commutator electric motor, a brush spring is used to press a brush against the commutator. The brush spring applies pressure to the brush using spring elasticity. Conventionally, a coil spring or a torsion spring has been used as a brush spring of a commutator electric motor.

However, the coil spring or the torsion spring has a large difference between the pressure (initial pressure) before the brush wear and the pressure (final pressure) after the brush wear, and therefore it is necessary to set the initial pressure high in order to secure at least a certain final pressure or more. For this reason, in the initial stage, friction between the brush and the commutator increases during rotation of the rotor, and sliding loss of the brush may increase. This results in a decrease in efficiency of the electric motor and a decrease in brush life.

Therefore, in order to reduce the difference between the initial pressure and the final pressure and apply uniform pressure (load) to the brush, a technique using a constant load spring as a brush spring has been proposed. For example, PTL 1 discloses an electric motor that applies a constant load to a brush by bringing a spiral part of a spiral spring into contact with a rear end surface of the brush using the spiral spring having the spiral part in which a strip-shaped wire material is spirally wound as a constant load spring.

However, it has been found that in the conventional spiral spring, the spiral part moves left and right as the brush wears. In this case, with the brush wear, the contact part between the rear end surface of the brush and the spiral part also moves left and right. This may cause the load applied to the brush by the spiral spring to be unstable. In particular, when the spiral part moves left and right, the spiral spring is accommodated in a brush holder together with the brush, and therefore the spiral part of the spiral spring may come into contact with the inner surface of the brush holder. In this case, the load applied to the brush by the spiral spring greatly decreases.

As described above, when the spiral part of the spiral spring moves left and right, it becomes no longer possible to apply a stable load to the brush. As a result, the efficiency of the electric motor decreases, or the life of the brush decreases due to unstable mechanical wear.

### Citation List

### Patent Literature

PTL 1: Unexamined Japanese Patent Publication No. S61-118987
PTL 2: JP 2008 125202 A
PTL 3: US 2009/230813 A1

### SUMMARY OF THE INVENTION

The present disclosure has been made to solve the above problems. An object of the present disclosure is to provide an electric motor capable of suppressing a decrease in efficiency of the electric motor and a decrease in life of the brush by applying a stable load to the brush even when a constant load spring is used.

In order to achieve the above object, one aspect of an electric motor according to the present disclosure includes: a rotor including a rotary shaft and a commutator mounted to the rotary shaft; a brush including a first end in contact with the commutator and a second end positioned on a side opposite to the first end; and a constant load spring including a strip-shaped wire material and configured to press the brush against the commutator, wherein the constant load spring includes a spiral part around which the strip-shaped wire material is wound, and the spiral part and the second end are in contact with each other at two or more locations, the brush is held in a brush holder, the brush holder includes a tubular part having a tubular shape surrounding the brush, the constant load spring has a fold-back structure in which one end drawn out from the spiral part is bent to be folded back outward, the fold-back structure includes a first fold-back part in which the one end is folded back outward, and an opposing part opposing to the first fold-back part, the constant load spring is fixed to an opening end of the tubular part by the fold-back structure being inserted into the opening end of the brush holder to cause the first fold-back part and the opposing part to sandwich the opening end of the tubular part, the brush holder accommodates the constant load spring together with the brush in the tubular part the first fold-back part includes a first slit extending along an insertion direction of the fold-back structure,the brush holder has a protrusion erected on an outer surface of an outer wall of the tubular part and extending along the insertion direction, and the constant load spring is fixed to the tubular part by the fold-back structure being inserted into an opening end of the tubular part and the first slit being inserted into the protrusion.

It is preferable that the second end includes a recess, and the spiral part is in contact with the recess at two or more locations.

In a cross-section taken along a plane orthogonal to an axial center direction of the rotary shaft, the recess may have a V shape, an arc shape, a U shape, or a backwards C shape.

It is preferable that in a cross-section taken along a plane orthogonal to an axial center direction of the rotary shaft, the spiral part and the second end are in contact with each other at two points of a first point and a second point, and a line connecting the first point and the second point is parallel to a direction orthogonal to a longitudinal direction of the brush.

It is preferable that in a circle centered on a center of the spiral part, a center angle formed by the first point and the second point as a chord is θ, θ ≥ 40° is true.

It is more preferable that in a circle centered on a center of the spiral part, a center angle formed by the first point and the second point as a chord is θ, θ ≥ 48° is true.

The second end may include a restriction part that restricts the spiral part from moving in an axial center direction of the rotary shaft.

The brush may include a carbon brush and a mounting component mounted to a rear end of the carbon brush, and the second end may be a rear end of the mounting component.

The fold-back structure may further include a second fold-back part erected on the first fold-back part, the second fold-back part may include a second slit continuous with the first slit, and the second slit may be without being cut out up to a tip end of the second fold-back part.

It is preferable that a gap between the first fold-back part and the opposing part becomes narrower as a distance from a fold-back position of the fold-back structure increases.

It is preferable to further include a conductive wire having one end connected to the brush and an other end connected to an electrode terminal that provides the brush with electric power, and that a length of the conductive wire is set in such a way that the constant load spring applies a pressing force to the brush even when the brush is maximally worn.

According to the present disclosure, even when a constant load spring is used, a stable load can be applied to the brush. Therefore, it is possible to suppress a decrease in efficiency of the electric motor and a decrease in life of the brush.

### BRIEF DESCRIPTION OF THE DRAWINGS

Fig. 1 is an external perspective view of an electric blower according to an exemplary embodiment.
Fig. 2 is an exploded perspective view of the electric blower according to the exemplary embodiment.
Fig. 3 is a cross-sectional view of the electric blower according to the exemplary embodiment taken along a plane passing through an axial center of a rotary shaft.
Fig. 4 is a cross-sectional view of the electric blower according to the exemplary embodiment taken along a plane passing through an axial center of a rotary shaft.
Fig. 5 is a cross-sectional view of the electric blower according to the exemplary embodiment taken along a plane passing through a pair of brushes and orthogonal to an axial center of a rotary shaft.
Fig. 6 is a perspective view of a brush holder in a state where a brush and a constant load spring are accommodated, as viewed from front.
Fig. 7 is a perspective view of a brush holder in a state where a brush and a constant load spring are accommodated, as viewed from rear.
Fig. 8 is an exploded perspective view of the brush, the brush holder, and the constant load spring.
Fig. 9 is a perspective view illustrating a contact part between the brush and the constant load spring.
Fig. 10 is a cross-sectional view illustrating a contact part between the brush and the constant load spring.
Fig. 11 is a view illustrating a shape of an outer end before a fold-back structure is formed in the constant load spring according to the exemplary embodiment.
Fig. 12A is a view for describing a state when the constant load spring and the brush are incorporated into the brush holder in the electric motor according to the exemplary embodiment.
Fig. 12B is a view for describing a state when the constant load spring and the brush are incorporated into the brush holder in the electric motor according to the exemplary embodiment.
Fig. 12C is a view for describing a state when the constant load spring and the brush are incorporated into the brush holder in the electric motor according to the exemplary embodiment.
Fig. 13A is a view for describing a state when the constant load spring is incorporated into the brush holder in the electric motor according to the exemplary embodiment.
Fig. 13B is a view for describing a state when the brush is incorporated into the brush holder in the electric motor according to the exemplary embodiment.
Fig. 13C is a view for describing a relation between a brush and a conductive wire when the brush is worn in the electric motor according to the exemplary embodiment.
Fig. 14A is a view for describing a state where a brush slides and a constant load spring moves as the brush wears in an electric motor of a comparative example.
Fig. 14B is a view for describing a state where the brush slides and the constant load spring moves as the brush wears in the electric motor of the comparative example.
Fig. 14C is a view for describing a state where the brush slides and the constant load spring moves as the brush wears in the electric motor of the comparative example.
Fig. 15A is a view for describing a state where the brush slides and the constant load spring moves as the brush wears in the electric motor according to the exemplary embodiment.
Fig. 15B is a view for describing a state where the brush slides and the constant load spring moves as the brush wears in the electric motor according to the exemplary embodiment.
Fig. 15C is a view for describing a state where the brush slides and the constant load spring moves as the brush wears in the electric motor according to the exemplary embodiment.
Fig. 16 is a view illustrating an experimental result on a relation between a groove width of a recess of a V shaped groove and left-and-right movement of a spiral part of the constant load spring.
Fig. 17 is a view illustrating a shape of an outer end of a metal plate before a fold-back structure is formed in a constant load spring according to the modification.
Fig. 18A is a perspective view of the constant load spring according to the modification.
Fig. 18B is a top view of the constant load spring according to the modification.
Fig. 19A is a view for describing a state when the constant load spring and the brush according to the modification are incorporated into the brush holder.
Fig. 19B is a view for describing a state when the constant load spring and the brush according to the modification are incorporated into the brush holder.
Fig. 19C is a view for describing a state when the constant load spring and the brush according to the modification are incorporated into the brush holder.
Fig. 20A is a view illustrating the configuration of the constant load spring according to the modification.
Fig. 20B is a view illustrating the configuration of the constant load spring according to the modification.
Fig. 21A is an enlarged view of the contact part between the brush and the constant load spring according to the modification.
Fig. 21B is an enlarged view of the contact part between the brush and the constant load spring according to the modification.
Fig. 22A is an enlarged view of the contact part between the brush and the constant load spring according to the modification.
Fig. 22B is an enlarged view of the contact part between the brush and the constant load spring according to the modification.
Fig. 23 is an enlarged view of the contact part between the brush and the constant load spring according to the modification.
Fig. 24 is a cross-sectional view illustrating a state where the brush and the constant load spring according to the modification are accommodated in the brush holder.

### DESCRIPTION OF EMBODIMENT

An exemplary embodiment of the present disclosure will be described below with reference to the drawings. The exemplary embodiment described below illustrates one specific example of the present disclosure. Therefore, numerical values, shapes, materials, components, arrangement positions and connection modes of the components, and the like described in the following exemplary embodiment are merely examples, and are not intended to limit the present disclosure. Thus, of the components in the following exemplary embodiment, components that are not recited in the independent claims will be described as optional components.

Moreover, in the present description and the drawings, an X axis, a Y axis, and a Z axis indicate three axes of a three-dimensional orthogonal coordinate system. The X axis and the Y axis are axes orthogonal to each other and each orthogonal to the Z axis. In the present exemplary embodiment, the Z axis direction is a direction of axial center C of rotary shaft 13.

The drawings are each a schematic view, and are not necessarily strictly illustrated. In each of the drawings, substantially the same components are denoted by the same reference marks, and redundant description will be omitted or simplified.

### (Exemplary embodiment)

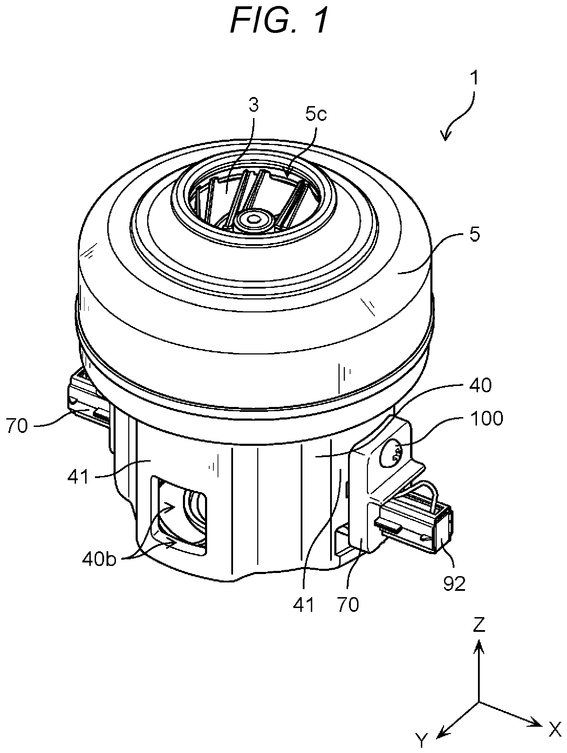

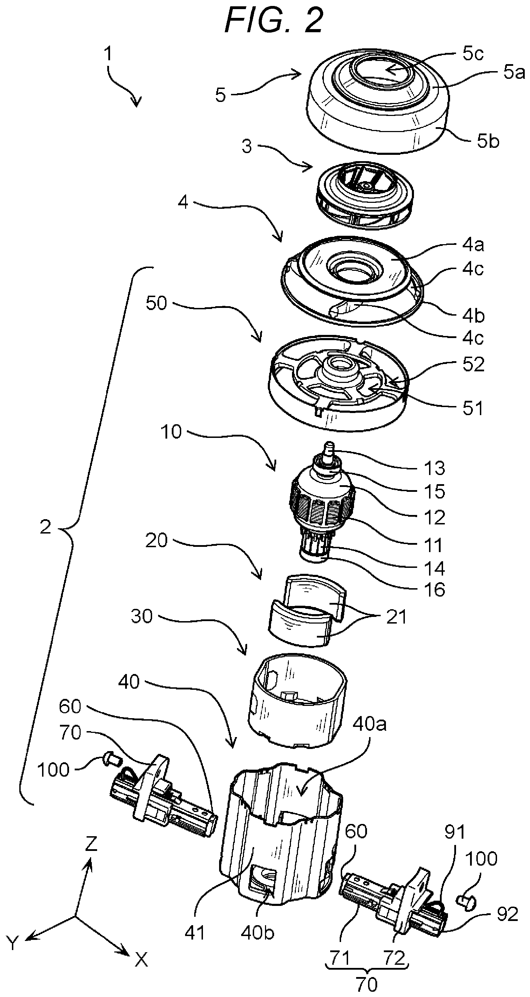

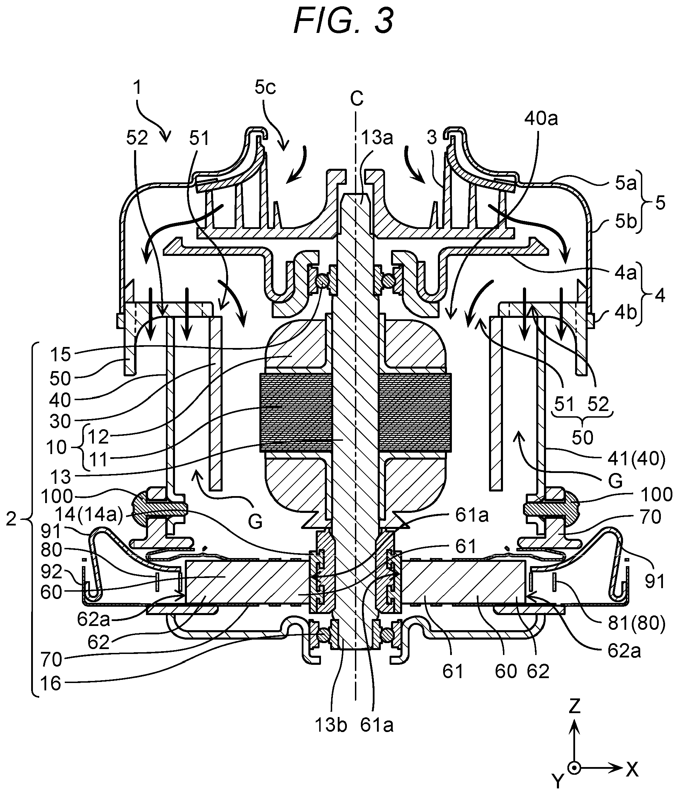

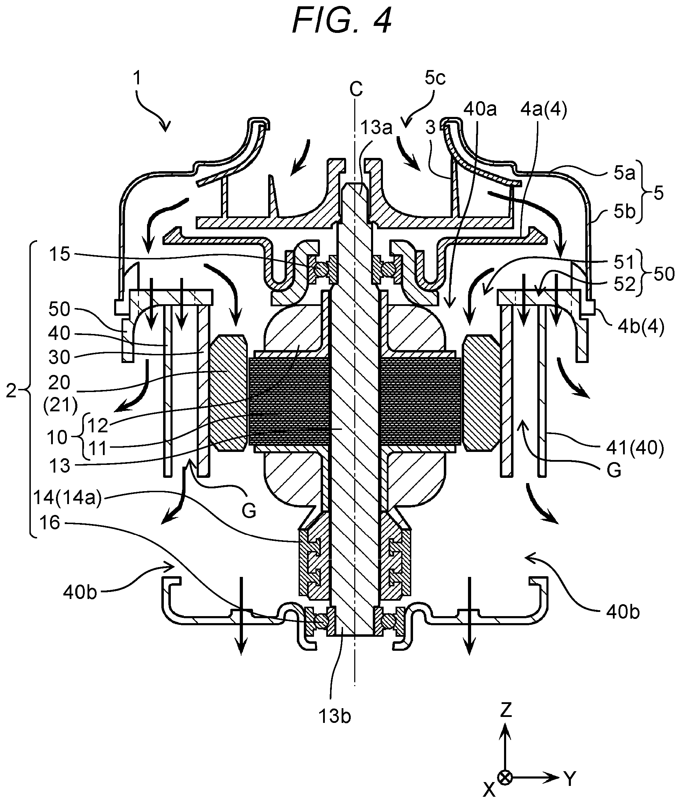

First, an overall configuration of electric blower 1 according to the exemplary embodiment will be described with reference to Figs. 1 to 4. Fig. 1 is an external perspective view of electric blower 1 according to the exemplary embodiment. Fig. 2 is an exploded perspective view of electric blower 1. Figs. 3 and 4 are cross-sectional views of electric blower 1 taken along a plane passing through axial center C of rotary shaft 13. Fig. 3 illustrates a cross-section (XZ cross-section) taken along a cross-section passing through a pair of brushes 60. Fig. 4 illustrates a cross-section (YZ cross-section) taken along a cross-section passing through a pair of magnets 21 of stator 20. Figs. 3 and 4 illustrate a part appearing in the cross-section. In Figs. 3 and 4, the flow of air flowing into electric blower 1 when rotary fan 3 rotates is indicated by an arrow.

As illustrated in Figs. 1 to 4, electric blower 1 includes electric motor 2, rotary fan 3, air guide 4, and fan case 5. Electric motor 2 includes rotor 10 and stator 20. Rotary fan 3 is mounted to rotary shaft 13 included in electric motor 2. Air discharged from rotary fan 3 flows into air guide 4. Fan case 5 accommodates rotary fan 3. Electric blower 1 is used, for example, in a vacuum cleaner.

Electric motor 2 is a fan motor that rotates rotary fan 3. As an example, electric motor 2 is a DC electric motor to which a DC power supply is input. Electric motor 2 is a commutator electric motor with a brush.

As illustrated in Figs. 2 to 4, electric motor 2 includes rotor 10, stator 20, yoke 30, frame 40, bracket 50, brush 60, brush holder 70, and constant load spring 80. Rotor 10, stator 20, and yoke 30 are disposed in frame 40. A detailed configuration of each member of electric motor 2 will be described below.

Rotary fan 3 sucks air into an outer shell (housing) including frame 40 and fan case 5. As an example, rotary fan 3 is a centrifugal fan that can obtain high suction pressure. Rotation of rotary fan 3 generates a wind pressure, air is sucked from inlet port 5c of fan case 5, and air is discharged from rotary fan 3. The air discharged from rotary fan 3 flows into air guide 4. Rotary fan 3 is made of, for example, a resin material or a metal material such as aluminum.

As an example, rotary fan 3 includes a first side plate provided with a suction port, a second side plate facing the first side plate across a predetermined gap, and a plurality of fan blades sandwiched between the first side plate and the second side plate. The plurality of fan blades each have a plate shape curved in an arc shape. The plurality of fan blades are arranged radially in such a way as to swirl.

Air guide 4 has a function of forming a flow path of an airflow. For example, air guide 4 commutates and discharges the air sucked from inlet port 5c of fan case 5 by the rotation of rotary fan 3. The air discharged from air guide 4 flows into frame 40 via bracket 50. In the present exemplary embodiment, the air discharged from air guide 4 is not only discharged to the inside of frame 40 but also discharged to the outside of frame 40 via bracket 50.

Air guide 4 includes main body 4a, ring shape part 4b having an annular shape, and a plurality of coupling plates 4c. Ring shape part 4b surrounds main body 4a with a gap from main body 4a. The plurality of coupling plates 4c couple main body 4a and ring shape part 4b. A gap between main body 4a and ring shape part 4b serves as a ventilation path.

Main body 4a is a disk body having a through hole for fixing to bracket 50. Ring shape part 4b functions as a support part that supports an end in the direction (thrust direction) of axial center C of rotary shaft 13 in side wall portion 5b of fan case 5. Each of the plurality of coupling plates 4c functions as a guide plate for forming a flow path of the airflow. Specifically, the plurality of coupling plates 4c each have a plate shape curved in an arc shape. The plurality of coupling plates 4c are radially arranged in such a way as to swirl outward from the through hole of main body 4a. Air guide 4 is made of, for example, a resin material. However, air guide 4 may be made of a metal material.

Fan case 5 is a housing that accommodates rotary fan 3. Fan case 5 is a cover that covers rotary fan 3 and air guide 4. As an example, fan case 5 is a metal cover made of a metal material. However, fan case 5 may be a resin cover made of a resin material.

Fan case 5 includes lid 5a and side wall portion 5b. Lid 5a covers upper parts of rotary fan 3 and air guide 4. Side wall portion 5b covers side parts of rotary fan 3 and air guide 4. Fan case 5 has inlet port 5c (suction port) for sucking outside air. Inlet port 5c is a circular through hole provided at the center of lid 5a.

Fan case 5 is fixed to bracket 50. Fan case 5 is fixed to bracket 50 via air guide 4. Inlet port 5c of fan case 5 may be mounted with a fan case spacer having an opening corresponding to inlet port 5c.

In electric blower 1 configured as described above, when rotor 10 included in electric motor 2 rotates, rotary fan 3 rotates, and air is sucked into fan case 5 from inlet port 5c of fan case 5. Due to this, air flows into rotary fan 3. The air sucked by rotary fan 3 is compressed to a high pressure by the fan blade included in rotary fan 3, and is discharged radially outer side from an outer peripheral side of rotary fan 3. The air discharged from rotary fan 3 flows into air guide 4 along side wall portion 5b of fan case 5, and reaches bracket 50 through the ventilation path of air guide 4.

Part of the air having reached bracket 50 flows into frame 40 via bracket 50, passes through inside frame 40, and is discharged to the outside from exhaust port 40b of frame 40. That is, the air flowing into frame 40 is discharged to the outside of electric blower 1 while cooling heat generation components (such as winding) of electric motor 2.

On the other hand, another part of the air having reached bracket 50 is directly discharged to the outside of electric blower 1 via bracket 50 without passing through inside of frame 40. This enables the airflow to be discharged to the outside of electric blower 1 without causing a loss due to passage through inside of frame 40.

Next, a detailed configuration of each member included in electric motor 2 will be described with reference to Figs. 2 to 4.

As illustrated in Figs. 3 and 4, rotor 10 of electric motor 2 is disposed with a minute air gap between rotor 10 and stator 20. In the present exemplary embodiment, rotor 10 is an inner rotor and is disposed inside stator 20. Rotor 10 has rotary shaft 13, and rotates about axial center C of rotary shaft 13 as a rotation center by the magnetic force generated by stator 20.

Rotor 10 generates a magnetic force acting on stator 20. Specifically, the orientation of a main magnetic flux generated by rotor 10 is a direction orthogonal to the direction of axial center C of rotary shaft 13. In the present exemplary embodiment, rotor 10 is an armature. Rotor 10 includes rotor iron core 11 (rotor core), winding coil 12, rotary shaft 13, and commutator 14. Rotor iron core 11 is mounted to rotary shaft 13. Winding coil 12 is wound around rotor iron core 11. Figs. 2 to 4 schematically illustrate winding coil 12.

Rotor iron core 11 is an armature core around which winding coil 12 is wound. Rotor iron core 11 is a laminate in which a plurality of electromagnetic steel sheets are laminated in a direction in which axial center C of rotary shaft 13 extends. Rotor iron core 11 is not limited to a laminate of electromagnetic steel plates. Rotor iron core 11 may be a bulk body made of a magnetic material.

Rotor iron core 11 has a plurality of teeth each protruding toward radially outer side of rotary shaft 13. The plurality of teeth radially extend in a direction (radial direction) orthogonal to axial center C of rotary shaft 13. The plurality of teeth are magnetic poles. The plurality of teeth generate a magnetic force acting on stator 20 by current flowing through winding coil 12 wound around each tooth.

Winding coil 12 is wound around rotor iron core 11. Specifically, winding coil 12 is wound around a plurality of teeth of rotor iron core 11. Winding coil 12 may be wound around rotor iron core 11 via an insulator. Winding coil 12 is electrically connected to commutator segment 14a of commutator 14. When a current flows through winding coil 12 via commutator 14, a magnetic force acting on stator 20 is generated in each tooth of rotor iron core 11.

Rotary shaft 13 is fixed to the center of rotor iron core 11. Rotary shaft 13 is a shaft having axial center C. Rotary shaft 13 is an elongated rod-like member such as a metal rod. Axial center C of rotary shaft 13 is a center when rotor 10 rotates. The longitudinal direction (extension direction) of rotary shaft 13 is the direction of axial center C (axial center direction).

Rotary shaft 13 is fixed to rotor iron core 11 in a state of penetrating rotor iron core 11 in such a way as to extend on both sides of rotor iron core 11 in the direction of axial center C of rotary shaft 13. Specifically, rotary shaft 13 is inserted into a through hole provided at the center of rotor iron core 11 and fixed to rotor iron core 11. Rotary shaft 13 is fixed to rotor iron core 11, for example, by being press-fitted or shrink fitted into the through hole of rotor iron core 11.

Rotary shaft 13 is rotatably supported by first bearing 15 and second bearing 16. Specifically, first site 13a of rotary shaft 13 protruding to one side from rotor iron core 11 is supported by first bearing 15. Second site 13b of rotary shaft 13 protruding from rotor iron core 11 to the other side is supported by second bearing 16. As an example, first bearing 15 and second bearing 16 are bearings such as ball bearings. In this manner, rotary shaft 13 is supported by first bearing 15 and second bearing 16 in a rotatable state. First bearing 15 is fixed to bracket 50. Second bearing 16 is fixed to the bottom of frame 40. That is, bracket 50 is a first bracket, and frame 40 is a second bracket.

First site 13a of rotary shaft 13 protrudes from first bearing 15. A tip end of first site 13a of rotary shaft 13 protruding from first bearing 15 is mounted with rotary fan 3.

Commutator 14 is mounted to rotary shaft 13. Therefore, commutator 14 rotates together with rotary shaft 13. Commutator 14 is mounted to second site 13b of rotary shaft 13. Specifically, commutator 14 is disposed between rotor iron core 11 and second bearing 16 on rotary shaft 13.

Commutator 14 includes a plurality of commutator segments 14a arrayed annularly in such a way as to surround rotary shaft 13. The plurality of commutator segments 14a are insulated and separated from one another in the rotation direction of rotary shaft 13. As described above, each of the plurality of commutator segments 14a is electrically connected to winding coil 12.

As illustrated in Fig. 4, stator 20 opposes rotor 10. Specifically, stator 20 opposes rotor iron core 11. Stator 20 is disposed on the outer peripheral side in the radial direction of rotor iron core 11. Stator 20 is a plurality of magnets 21 arranged at intervals over the circumferential direction of rotor 10. Magnet 21 is a field magnet that generates a magnetic flux for generating torque. Magnet 21 is, for example, a permanent magnet having an S pole and an N pole. The plurality of magnets 21 are arranged in such a way that N poles and S poles alternate along the rotation direction (circumferential direction) of rotary shaft 13.

Stator 20 includes two magnets 21 opposing each other with rotor 10 interposed therebetween. A minute air gap exists between the inner surface of each magnet 21 and the outer peripheral surface of rotor 10 (rotor iron core 11). Magnet 21 is fixed to yoke 30.

As illustrated in Fig. 4, yoke 30 surrounds magnet 21. Yoke 30 constitutes a magnetic circuit (field) together with magnet 21. Therefore, yoke 30 may be regarded as a part of stator 20. Yoke 30 has a tubular shape with a constant thickness, and surrounds entire rotor 10 and stator 20 (magnet 21). Yoke 30 is made of a magnetic material such as iron.

As illustrated in Figs. 1 and 2, frame 40 is a housing (case) that accommodates components constituting electric motor 2, such as rotor 10 and stator 20. In the present exemplary embodiment, frame 40 is an outer frame member (outer shell) of electric blower 1 and electric motor 2. Frame 40 can be made of, for example, a metal material such as aluminum.

As illustrated in Figs. 1 to 4, each of the side wall portion and the bottom of frame 40 is provided with a plurality of exhaust ports 40b for discharging the air sucked by rotation of rotary fan 3. For example, the side wall portion of frame 40 is provided with a pair of exhaust ports 40b opposing each other. The bottom of frame 40 is provided with the pair of exhaust ports 40b opposing each other.

As illustrated in Figs. 3 and 4, a plurality of gaps G serving as ventilation paths to the direction (rotation axis direction) of axial center C of rotary shaft 13 are formed between the outer surface of yoke 30 and the inner surface of frame 40.

As illustrated in Figs. 1 to 3, frame 40 has bulge 41 in which a part of the side wall portion of frame 40 bulges radially outer side. Gap G is a space region between bulge 41 and yoke 30. Bulge 41 is a rib formed into a protrusion, and can be formed by, for example, pressing the side wall portion of frame 40.

As illustrated in Figs. 3 and 4, bracket 50 covers opening 40a of frame 40. Bracket 50 partially covers opening 40a of frame 40 without completely closing opening 40a of frame 40. That is, in a state where bracket 50 is mounted to frame 40, the air commutated by air guide 4 flows into frame 40.

Bracket 50 is provided with a plurality of through holes as openings through which the air commutated by air guide 4 passes. Specifically, as illustrated in Figs. 2 to 4, bracket 50 is provided with four first through holes 51 and four second through holes 52. Four first through holes 51 are positioned radially inner side. Four second through holes 52 are positioned radially outer side relative to first through holes 51.

Bracket 50 is fixed to frame 40. For example, bracket 50 and frame 40 are fixed by a site (recess) between two adjacent bulges 41 of the side wall portion of frame 40 being jointed to bracket 50.

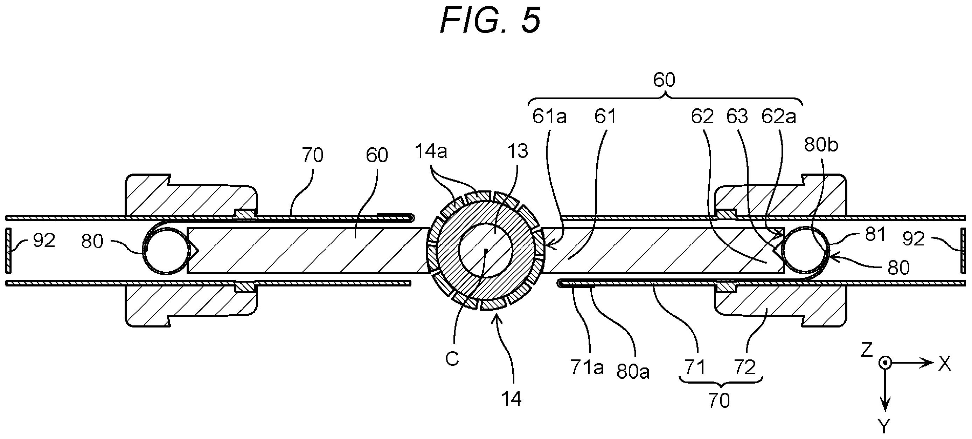

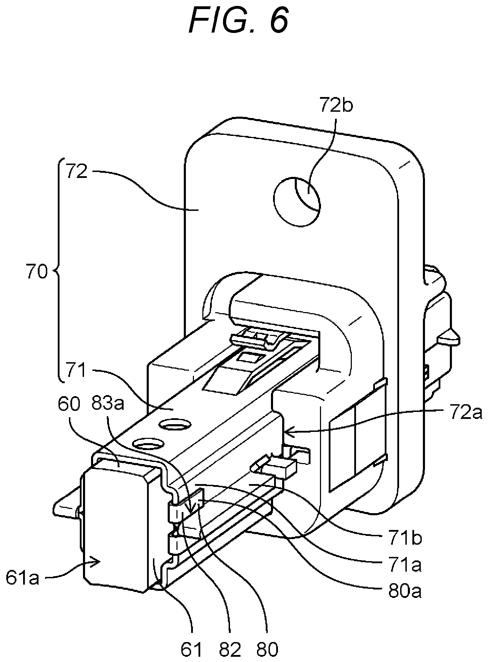

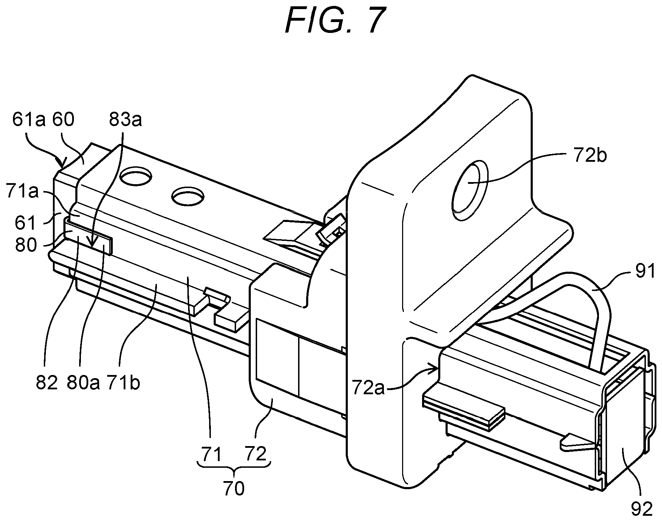

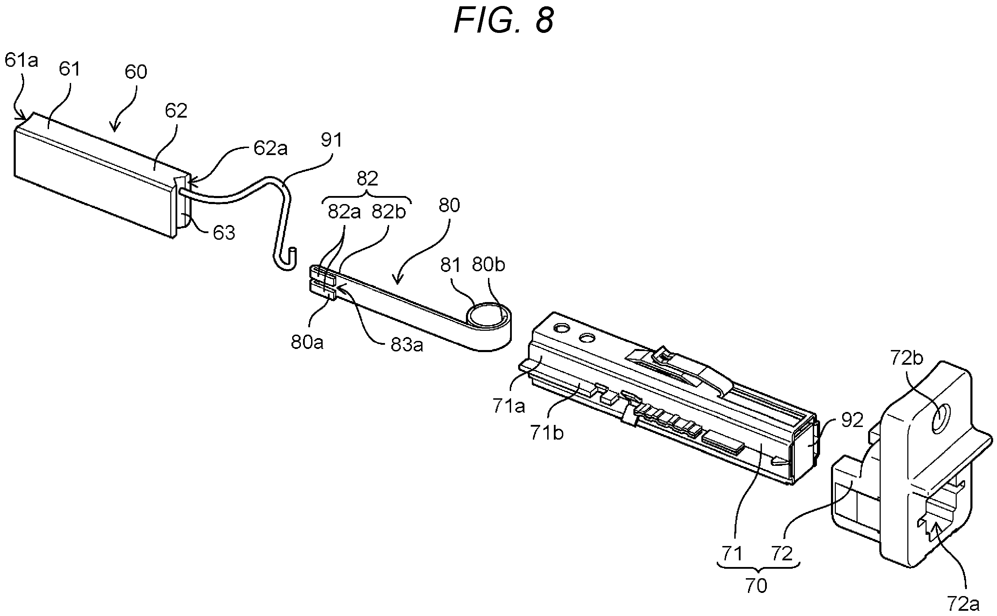

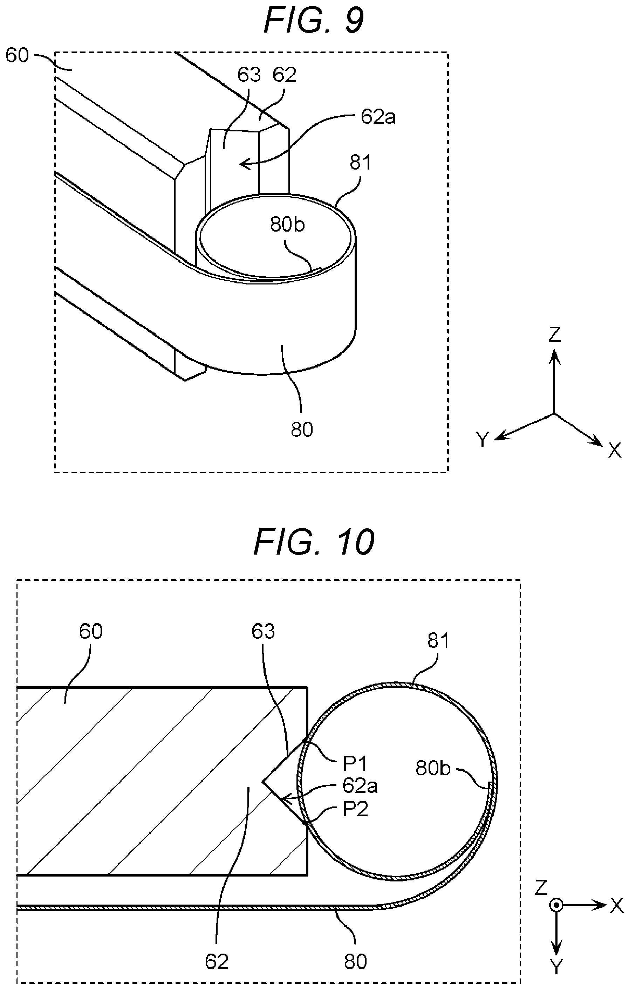

Next, brush 60, brush holder 70, and constant load spring 80 will be described with reference to Figs. 2 and 3 as well as Figs. 5 to 10. Fig. 5 is a cross-sectional view (XY cross-sectional view) of electric blower 1 according to the exemplary embodiment taken along a plane passing through the pair of brushes 60 and orthogonal to axial center C of rotary shaft 13. Fig. 6 is a perspective view of brush holder 70 when viewed from the front in a state where brush 60 and constant load spring 80 are accommodated. Fig. 7 is a perspective view of brush holder 70 when viewed from the rear in a state where brush 60 and constant load spring 80 are accommodated. Fig. 8 is an exploded perspective view of brush 60, brush holder 70, and constant load spring 80. Fig. 9 is a perspective view illustrating a contact part between brush 60 and constant load spring 80. Fig. 10 is a cross-sectional view illustrating a contact part between brush 60 and constant load spring 80.

As illustrated in Figs. 3 and 5, brush 60 is in contact with commutator 14 in a direction (radial direction) intersecting the direction of axial center C of rotary shaft 13. Brush 60 is pressed against commutator 14 by a pressing force received from constant load spring 80. Specifically, brush 60 is provided movably in the radial direction and slidably in contact with commutator 14 by the pressing force from constant load spring 80.

The pair of brushes 60 are provided. The pair of brushes 60 are disposed to oppose each other in such a way as to sandwich commutator 14. That is, the pair of brushes 60 are disposed to oppose each other with commutator 14 interposed therebetween. Specifically, the pair of brushes 60 are disposed at positions that are line-symmetric about axial center C of rotary shaft 13. Each of the pair of brushes 60 is an elongated member, and is disposed in such a way that its longitudinal direction is a radial direction. As an example, brush 60 is an elongated substantially rectangular parallelepiped.

Brush 60 is a power supply brush that supplies electric power to rotor 10 when brought into contact with commutator 14. Specifically, brush 60 is electrically connected to electrode terminal 92 that receives an input voltage from a power supply via conductive wire 91. When brush 60 comes into contact with commutator segment 14a of commutator 14, an armature current supplied from a power supply to brush 60 via conductive wire 91 and electrode terminal 92 flows to winding coil 12 of rotor 10 via commutator segment 14a. The power source is an external power source existing outside electric motor 2. The power supply supplies a predetermined input voltage to electric motor 2.

Brush 60 is made of a conductive conductor. In the present exemplary embodiment, brush 60 is made only of a conductor. Specifically, brush 60 is configured only by an elongated substantially rectangular parallelepiped carbon brush made of carbon. As an example, brush 60 is a metal graphite brush containing a metal such as copper and carbon. In the present exemplary embodiment, brush 60 is a carbon brush containing copper. Brush 60 can be manufactured by pulverizing a kneaded product obtained by kneading graphite powder, copper powder, a binder resin, and a curing agent, compression molding the pulverized product into a rectangular parallelepiped, and firing the resultant.

As illustrated in Figs. 3 and 5, brush 60 includes front end 61, which is a first end in contact with commutator 14, and rear end 62, which is a second end positioned opposite to front end 61.

Front end 61 of brush 60 is one end in the longitudinal direction of brush 60. Front end 61 is a tip end of brush 60 on rotary shaft 13 side (radially inner side). Front end 61 has front end surface 61a serving as a contact surface in contact with commutator segment 14a of commutator 14.

On the other hand, rear end 62 of brush 60 is the other end in the longitudinal direction of brush 60. Rear end 62 is a tip end on an opposite side (radially outer side) to rotary shaft 13 side of brush 60. Rear end 62 has rear end surface 62a serving as a contact surface in contact with constant load spring 80.

Rear end 62 of brush 60 is provided with recess 63. Recess 63 is formed in such a way that a part of rear end surface 62a is recessed toward front end 61 side. In the present exemplary embodiment, recess 63 is formed in such a way that rear end surface 62a is notched in a V shape. Recess 63 is a V shaped groove having a uniform V shaped cross-sectional shape. Accordingly, recess 63 has a V shape in a cross-section (XY cross-section) taken along a plane orthogonal to the direction of axial center C of rotary shaft 13. Recess 63, which is a V shaped groove, has a line-symmetric V shape in the XY cross-section. Recess 63, which is a V shaped groove, is formed in such a way that a valley bottom line of the V shaped groove is substantially parallel to the direction of axial center C of rotary shaft 13.

Recess 63 can be formed, for example, by cutting off a triangular column from a flat end surface of the rectangular parallelepiped brush with a drill or the like and cutting the end surface. The shape of recess 63 may be formed not by cutting the flat end surface of brush 60 but into the shape of the mold when brush 60 is sintered.

As illustrated in Fig. 3, brush 60 is held by brush holder 70 in such a way as to move in the direction (radial direction) intersecting the direction of axial center C of rotary shaft 13. Brush holder 70 is a holder that holds brush 60. Brush holder 70 is fixed to frame 40. Specifically, brush holder 70 is inserted into an opening provided in frame 40, and is fixed to frame 40 by screw 100. Brush holders 70 are arranged in number corresponding to the number of brushes 60. In the present exemplary embodiment, since two brushes 60 are arranged, two brush holders 70 are also arranged.

As illustrated in Figs. 6 and 7, brush holder 70 accommodates brush 60. Brush holder 70 includes first holder 71 that accommodates brush 60, and second holder 72 that holds first holder 71.

First holder 71 is a tubular part having a tubular shape surrounding brush 60. First holder 71 has an elongated substantially rectangular tubular shape extending in the direction (radial direction) intersecting the direction of axial center C of rotary shaft 13. Both ends in the longitudinal direction of first holder 71 are opened. Brush 60 is disposed in first holder 71 in a state where front end 61 is exposed. Brush 60 may be disposed in first holder 71 in a state of being accommodated in a brush box made of a metal plate.

In opening end 71a in the front of tubular first holder 71, constant load spring 80 is fixed. A specific method of fixing first holder 71 and constant load spring 80 will be described below.

As illustrated in Figs. 6 to 8, brush holder 70 has protrusion 71b. Protrusion 71b is used when constant load spring 80 is fixed to brush holder 70. That is, constant load spring 80 is fixed to first holder 71 using not only opening end 71a of first holder 71 but also protrusion 71b. Protrusion 71b is erected on the outer surface of the outer wall of first holder 71. Specifically, protrusion 71b has a flat plate shape, and is provided in a screen shape on the outer wall on the side of first holder 71. Protrusion 71b has an elongated shape and extends along the longitudinal direction of first holder 71. That is, protrusion 71b extends along the direction (radial direction) intersecting the direction of axial center C of rotary shaft 13.

Second holder 72 has fitting hole 72a into which first holder 71 is fitted. First holder 71 is held by second holder 72 by being inserted into fitting hole 72a. Second holder 72 is provided with screw hole 72b through which screw 100 is inserted. By inserting second holder 72 holding first holder 71 into the opening of frame 40 and screwing screw 100 into screw hole 72b, it is possible to mount second holder 72 to frame 40. That is, it is possible to mount brush holder 70 to frame 40.

First holder 71 and second holder 72 are made of, for example, an insulating resin material. In the present exemplary embodiment, each of first holder 71 and second holder 72 is a resin molded item formed by integral molding using a resin material.

To the rear end of first holder 71, electrode terminal 92 is fixed. Electrode terminal 92 is disposed in such a way as to close the rear opening of first holder 71. Electrode terminal 92 and brush 60 are connected by conductive wire 91.

Conductive wire 91 is, for example, a pigtail line. One end of conductive wire 91 is connected to brush 60. The other end of conductive wire 91 is connected to electrode terminal 92. As illustrated in Fig. 8, one end of conductive wire 91 is connected to rear end surface 62a of brush 60. Conductive wire 91 may be connected to a side surface of brush 60.

Conductive wire 91 is routed in such a way as not to interfere with brush 60 even when brush 60 is worn due to sliding. This can suppress inhibition of sliding of brush 60 by conductive wire 91. The length of conductive wire 91 is set to be long in consideration of movement of brush 60 due to wear. Therefore, as illustrated in Fig. 7, in the initial state before brush 60 wears, conductive wire 91 protrudes from the opening formed on the upper surface of first holder 71.

Electrode terminal 92 connected to conductive wire 91 receives electric power for energizing winding coil 12 of rotor 10. That is, electrode terminal 92 provides electric power to brush 60. The electric power supplied to electrode terminal 92 is supplied to brush 60 via conductive wire 91, and is supplied to winding coil 12 via commutator segment 14a.

As illustrated in Fig. 5, brush holder 70 accommodates constant load spring 80. That is, brush holder 70 holds not only brush 60 but also constant load spring 80. Constant load spring 80 is accommodated in first holder 71 of brush holder 70 together with brush 60. That is, brush 60 and constant load spring 80 are arranged in first holder 71.

Constant load spring 80 is arranged in number in accordance with the number of brushes 60. In the present exemplary embodiment, since two brushes 60 are arranged, two constant load springs 80 are also arranged. Specifically, electric motor 2 is provided with two brush holders 70 that accommodate constant load spring 80 and brush 60.

Constant load spring 80 is a brush spring for pressing brush 60 against commutator 14. Specifically, constant load spring 80 presses brush 60 against commutator 14 by pressing brush 60. Constant load spring 80 is a spring that applies a uniform load to brush 60. That is, constant load spring 80 applies a uniform pressing force to brush 60.

As illustrated in Figs. 5 and 8, constant load spring 80 is formed of a strip-shaped wire material. Constant load spring 80 is a spiral spring, and has spiral part 81 (coil part) in which a strip-shaped wire material is spirally wound. Constant load spring 80 is made of, for example, one strip-plate-shaped wire material made of a metal material or the like.

Specifically, constant load spring 80 is formed of an elongated strip-shaped metal plate. Therefore, spiral part 81 is a part of constant load spring 80 in which an elongated strip-shaped metal plate is spirally wound a plurality of times only in one direction. The shape of one turn of spiral part 81 is circular in a cross-section (XY cross-section) taken along a plane orthogonal to the direction of axial center C of rotary shaft 13. Spiral part 81 configured as described above has a spring elastic force (spring restoring force) that causes the metal plate wound in the spiral shape to return to the original state.

Constant load spring 80 has outer end 80a that is one end of the strip-shaped metal plate and inner end 80b that is the other end of the strip-shaped metal plate. Outer end 80a is one tip end of a strip-shaped metal plate drawn out from the outermost periphery of spiral part 81. Inner end 80b is the other tip end of the strip-shaped metal plate positioned at the innermost periphery of spiral part 81.

As illustrated in Fig. 5, constant load spring 80 presses brush 60 against commutator 14 by spiral part 81. Specifically, constant load spring 80 has spiral part 81 in contact with rear end 62 of brush 60. Constant load spring 80 applies a load to brush 60 by spring elastic force of spiral part 81. That is, constant load spring 80 applies a pressing force (spring pressure) to brush 60 by spiral part 81. Due to this, brush 60 is biased toward commutator 14.

As illustrated in Figs. 9 and 10, spiral part 81 of constant load spring 80 and rear end 62 of brush 60 are in contact with each other at two or more locations. Rear end 62 of brush 60 is provided with recess 63. Spiral part 81 is in contact with recess 63 at two or more locations. Specifically, recess 63 is a V shaped groove having a uniform V shaped cross-sectional shape. Due to this, spiral part 81 made of a strip-shaped metal plate and recess 63 are in line contact with each other at two locations. That is, as illustrated in Fig. 10, in a cross-section taken along a plane orthogonal to the direction of axial center C of rotary shaft 13 (the Z axis direction in the present exemplary embodiment), spiral part 81 and rear end 62 are in contact with each other at two points of first point P1 and second point P2. First point P1 and second point P2 are contact points between spiral part 81 and rear end 62. As described above, spiral part 81 and recess 63 are in line contact with each other at two locations of first point P1 and second point P2. Spiral part 81 is in contact with the inner surface of recess 63, and a part of spiral part 81 enters inward of recess 63.

In the XY cross-section, recess 63 has a line-symmetric V shape, and spiral part 81 has a circular shape, and therefore a line connecting first point P1 and second point P2 is parallel to the direction orthogonal to the longitudinal direction of brush 60. That is, the line connecting first point P1 and second point P2 is parallel to the lateral direction of brush 60.

As described above, constant load spring 80 is accommodated in brush holder 70. Specifically, as illustrated in Fig. 5, constant load spring 80 is accommodated in first holder 71 of brush holder 70 in such a way that spiral part 81 is positioned at the rear of rear end 62 of brush 60. Outer end 80a of constant load spring 80 is disposed in first holder 71 in such a way as to be drawn out toward front end 61 side (commutator 14 side) of brush 60 through the side of brush 60.

Constant load spring 80 is fixed to brush holder 70. Specifically, as illustrated in Fig. 5, outer end 80a of constant load spring 80 is fixed to first holder 71 of brush holder 70. Constant load spring 80 is fixed to first holder 71 by outer end 80a of constant load spring 80 being locked to first holder 71.

Specifically, as illustrated in Fig. 8, constant load spring 80 has fold-back structure 82 in which outer end 80a drawn out from spiral part 81 is folded back outward. As illustrated in Figs. 6 and 7, constant load spring 80 is fixed to first holder 71 by fold-back structure 82 being inserted into opening end 71a of first holder 71. Opening end 71a of first holder 71 is a part of the side wall portion of tubular first holder 71.

As illustrated in Fig. 8, fold-back structure 82 includes first fold-back part 82a in which outer end 80a of constant load spring 80 is folded back outward, and opposing part 82b opposing first fold-back part 82a. First fold-back part 82a and opposing part 82b are metal pieces that are a part of a metal plate constituting constant load spring 80. First fold-back part 82a (first fold-back piece) is a part formed by an end of the metal plate being folded back outward by 180 degrees. First fold-back part 82a is a tip end of outer end 80a. Opposing part 82b (opposing piece) is a part of the metal plate facing first fold-back part 82a.

Constant load spring 80 is fixed to first holder 71 by fold-back structure 82 being inserted into opening end 71a of first holder 71 in such a way that opening end 71a of first holder 71 (tubular part) is sandwiched between first fold-back part 82a and opposing part 82b. That is, opening end 71a of first holder 71 is inserted into a gap between first fold-back part 82a and opposing part 82b in fold-back structure 82.

By forming fold-back structure 82 in constant load spring 80 in this manner, it is possible to fix constant load spring 80 to brush holder 70 only by inserting fold-back structure 82 into opening end 71a of first holder 71. Therefore, it is possible to reduce the number of steps and the number of components as compared with a case of fixing outer end 80a to brush holder 70 with rivets, screws, or the like without forming fold-back structure 82 in outer end 80a.

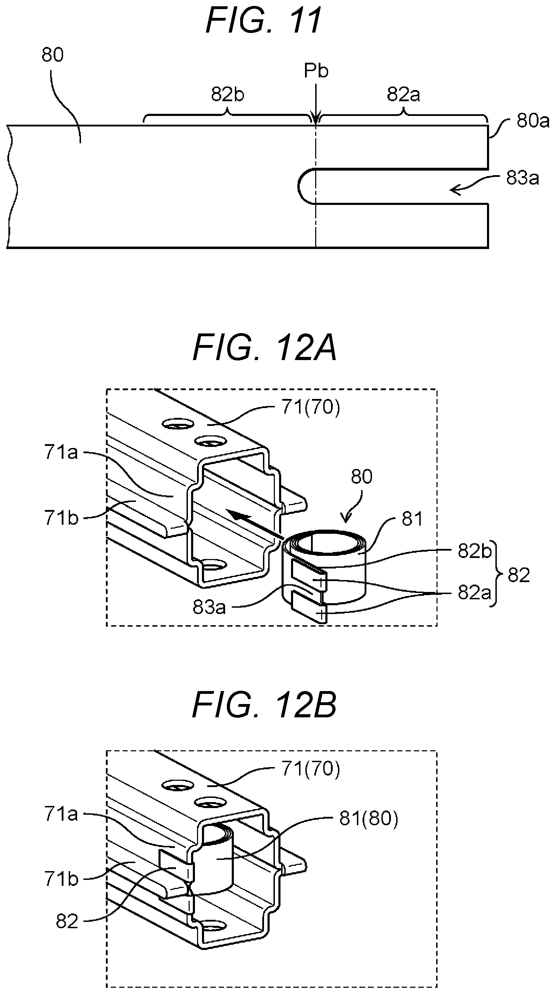

In the present exemplary embodiment, first fold-back part 82a is provided with first slit 83a extending along the insertion direction of fold-back structure 82. First slit 83a is formed along the longitudinal direction of the metal plate constituting constant load spring 80. Fig. 11 is a view illustrating the shape of outer end 80a before fold-back structure 82 is formed in constant load spring 80 according to the exemplary embodiment. As illustrated in Fig. 11, the tip end of first slit 83a is opened. That is, the tip end on one side of the metal plate before fold-back structure 82 is formed is separated into two narrow slips by the forming of first slit 83a. Fold-back structure 82 is formed by bending the metal plate provided with first slit 83a in such a way as to be folded back at fold-back position Pb by 180 degrees. Fold-back position Pb is a connection part between first fold-back part 82a and opposing part 82b. As illustrated in Fig. 11, fold-back position Pb is set in the middle of first slit 83a, but may be set at a position different from that of first slit 83a.

As described above, the outer wall of first holder 71 is provided with protrusion 71b. Protrusion 71b extends along the insertion direction when fold-back structure 82 is inserted into opening end 71a of first holder 71. In the present exemplary embodiment, constant load spring 80 is fixed to first holder 71 by using protrusion 71b.

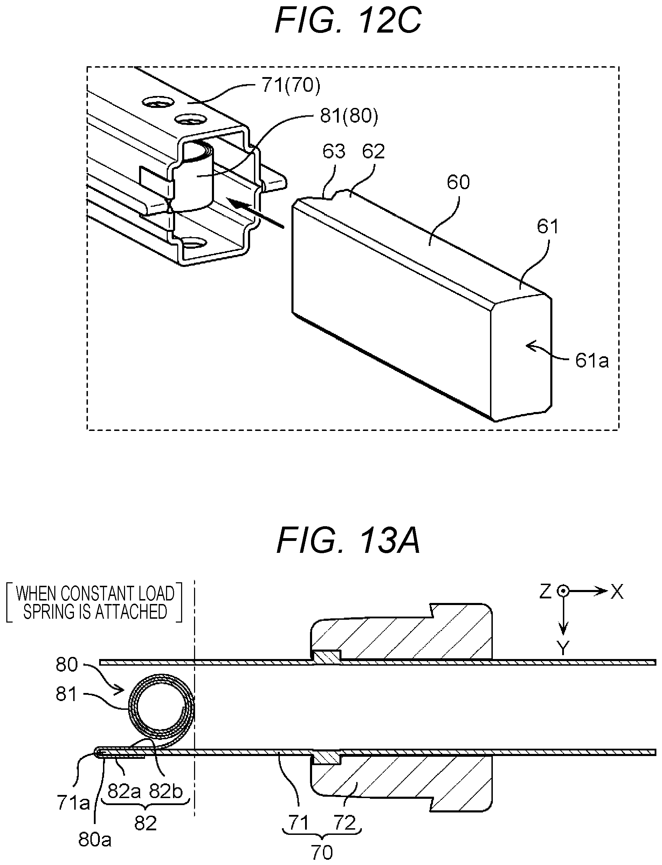

Figs. 12A, 12B, and 12C are views for describing a state when constant load spring 80 and brush 60 are incorporated in brush holder 70 in electric motor 2 according to the exemplary embodiment. Fig. 13A is a view for describing a state when the constant load spring is incorporated in the brush holder in the electric motor according to the exemplary embodiment. Specifically, when constant load spring 80 is fixed to first holder 71, as illustrated in Figs. 12A and 12B, fold-back structure 82 of constant load spring 80 is inserted into opening end 71a of first holder 71, and first slit 83a of constant load spring 80 is inserted into protrusion 71b. In this case, opening end 71a of first holder 71 is sandwiched between first fold-back part 82a and opposing part 82b of fold-back structure 82. Due to this, as illustrated in Fig. 13A, constant load spring 80 is set in the front part of first holder 71 in a state where outer end 80a is fixed to first holder 71.

In this manner, constant load spring 80 is fixed to first holder 71 by fold-back structure 82 being inserted into opening end 71a of first holder 71 and first slit 83a being inserted into protrusion 71b. That is, constant load spring 80 is fixed to first holder 71 by using not only fold-back structure 82 but also first slit 83a. By inserting protrusion 71b into first slit 83a, it is possible to suppress first fold-back part 82a constituting first slit 83a from moving in the up-and-down direction (the direction of axial center C of rotary shaft 13) by protrusion 71b. This can suppress constant load spring 80 mounted to first holder 71 from moving in the up-and-down direction. Therefore, it is possible to fix constant load spring 80 to brush holder 70 in a stable state.

In the present exemplary embodiment, constant load spring 80 is fixed to brush holder 70 only at outer end 80a. Constant load spring 80 is not fixed at a part other than outer end 80a. That is, a part other than outer end 80a of constant load spring 80 is not supported and is free. That is, constant load spring 80 is supported at only one location of outer end 80a.

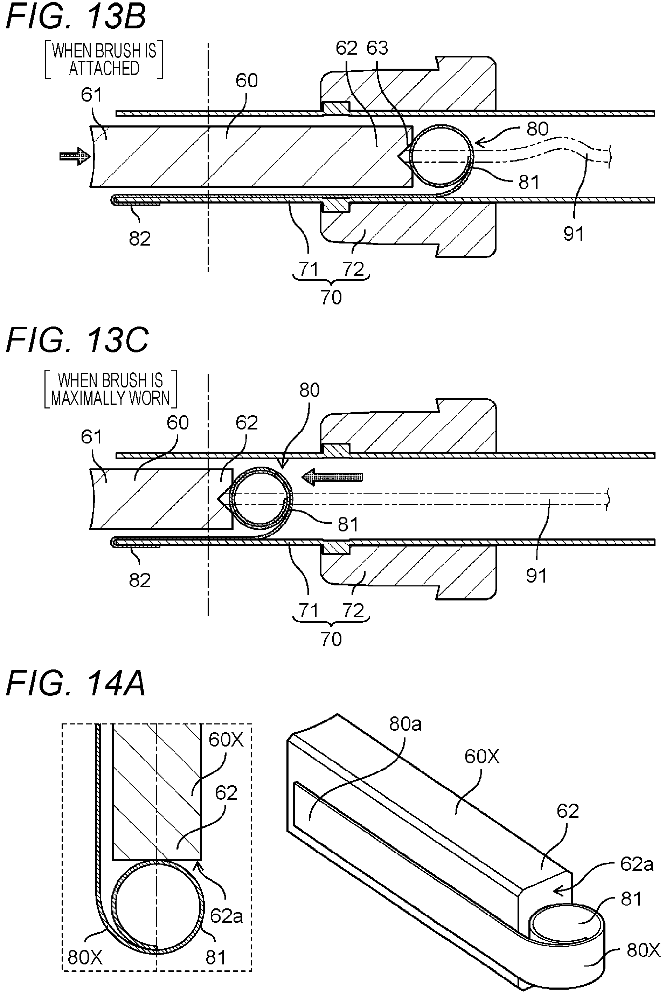

After constant load spring 80 is fixed to brush holder 70, brush 60 is inserted into brush holder 70 as illustrated in Fig. 12C. Specifically, brush 60 is inserted into the back side of first holder 71 while rear end 62 of brush 60 is pressed against spiral part 81 of constant load spring 80. Due to this, as illustrated in Fig. 13B, brush 60 is accommodated in first holder 71 in a state of being biased by the spring elastic force of spiral part 81 of constant load spring 80. Fig. 13B is a view for describing a state when brush 60 is incorporated into brush holder 70 in electric motor 2 according to the exemplary embodiment.

Fig. 13C is a view for describing a relation between brush 60 and conductive wire 91 when brush is worn in electric motor 2 according to the exemplary embodiment. In the present exemplary embodiment, as illustrated in Fig. 13C, the length of conductive wire 91 is set in such a way that constant load spring 80 applies a pressing force to brush 60 even when brush 60 is maximally worn. Furthermore, the length of conductive wire 91 is set in such a way that brush 60 is disposed at a position receiving the load of constant load spring 80 from when the position is the initial position of constant load spring 80 before brush 60 is assembled. That is, conductive wire 91 is fixed at a position where a load is applied to spiral part 81 of constant load spring 80 by brush 60.

With this configuration, as illustrated in Fig. 13C, even when brush 60 is completely worn, conductive wire 91 is stretched. This can suppress brush 60 from vibrating even if there is a gap between brush 60 and brush holder 70. When the length of conductive wire 91 is set as described above, constant load spring 80 can always apply pretension to brush 60 using the spring property of constant load spring 80. Due to this, the reaction force from brush 60 is applied to constant load spring 80, and thus constant load spring 80 once incorporated in brush holder 70 can be suppressed from coming off from brush holder 70.

In electric motor 2 configured as described above, the armature current supplied to brush 60 flows to winding coil 12 of rotor 10 via commutator 14. Due to this, a magnetic flux is generated in rotor 10, and a magnetic force generated by an interaction between the magnetic flux generated from rotor 10 and the magnetic flux generated from magnet 21 of stator 20 becomes torque that rotates rotor 10. Due to this, rotor 10 rotates. Rotation of rotor 10 makes rotary shaft 13 rotate. Due to this, rotary fan 3 mounted to rotary shaft 13 rotates.

When rotor 10 rotates in this manner, front end 61 of brush 60 in contact with commutator 14 wears. At this time, brush 60 always receives a constant load (pressing force) from constant load spring 80 and is pressed against commutator 14. Due to this, as front end 61 of brush 60 wears due to friction with commutator segment 14a, brush 60 slides toward commutator 14 in first holder 71 of brush holder 70. At this time, the wire material constituting constant load spring 80 is wound as brush 60 becomes shorter due to wear. That is, spiral part 81 approaches outer end 80a.

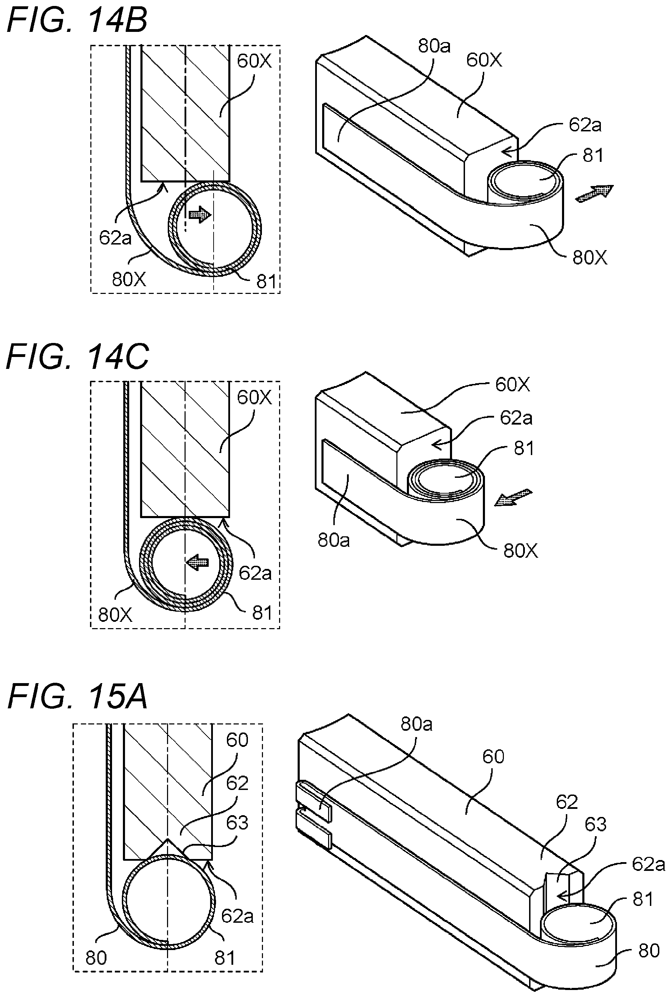

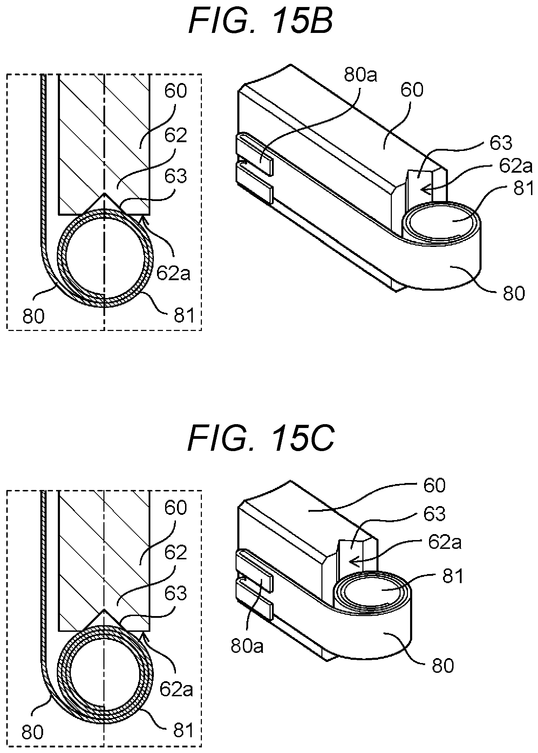

Here, the operations and effects of electric motor 2 according to the present exemplary embodiment will be described in comparison with the electric motor of the comparative example. Figs. 14A, 14B, and 14C are views for describing a state where brush 60X slides and constant load spring 80X moves as brush 60X wears in the electric motor of the comparative example. Figs. 15A, 15B, and 15C are views for describing a state where brush 60 slides and constant load spring 80 moves as brush 60 wears in electric motor 2 according to the exemplary embodiment.

In the electric motor of the comparative example, rear end 62 of brush 60X is not provided with recess 63. Rear end surface 62a of rear end 62 is a flat surface. Spiral part 81 of constant load spring 80X abuts on rear end surface 62a. Brush 60X receives a constant pressing force from spiral part 81 and is pressed against a commutator segment (not illustrated). In this case, in the electric motor of the comparative example, rear end surface 62a of brush 60X and spiral part 81 of constant load spring 80X are in contact with each other at only one location. That is, in the XY cross-section, rear end surface 62a of brush 60X and spiral part 81 of constant load spring 80X are in contact with each other at only one location.

In the electric motor of the comparative example configured as described above, brush 60X slides toward the side of the commutator segment as front end 61 of brush 60X wears due to friction with the commutator segment, similarly to electric motor 2 according to the present exemplary embodiment. Spiral part 81 of constant load spring 80X that applies a pressing force to brush 60X moves to the side of the commutator segment as brush 60X slides.

At this point, as illustrated in Figs. 14A, 14B, and 14C, in the electric motor of the comparative example, rear end surface 62a of brush 60X and spiral part 81 of constant load spring 80X are in contact with each other only at one location. Therefore, spiral part 81 that applies a load to brush 60X moves left and right on rear end surface 62a of brush 60X as brush 60X wears due to expansion and contraction of the spring by spiral part 81 itself at the time of movement. That is, the contact part between rear end surface 62a of brush 60X and spiral part 81 moves left and right as brush 60X wears.

Specifically, as illustrated in Fig. 14A, in the initial state before brush 60X wears, the center line of spiral part 81 and the center line of brush 60X coincide with each other. However, as illustrated in Fig. 14B, as brush 60X wears, spiral part 81 is shifted to the opposite side (right side in the figure) to the side where outer end 80a is drawn out. As brush 60X further wears, as illustrated in Fig. 14C, spiral part 81 is shifted to the side (left side in the figure) where outer end 80a is drawn out, and finally returns to the position of the initial state.

As described above, when spiral part 81 moves left and right along with wear of brush 60X, a load applied to brush 60X by spiral part 81 does not become constant. Therefore, there is a risk that the pressing force applied to brush 60X by spiral part 81 becomes unstable. In particular, when spiral part 81 moves left and right, spiral part 81 of constant load spring 80X may come into contact with the inner surface of the brush holder that holds constant load spring 80X and brush 60X. In this case, the load applied to brush 60X by constant load spring 80X greatly decreases.

On the other hand, in electric motor 2 according to the present exemplary embodiment, spiral part 81 of constant load spring 80 and rear end 62 of brush 60 are in contact with each other at two or more locations. Specifically, rear end 62 of brush 60 is provided with recess 63, and spiral part 81 is in contact with recess 63 at two locations.

In electric motor 2 configured in this manner, as described above, brush 60 slides toward the side of the commutator segment as front end 61 of brush 60 wears due to friction with commutator segment 14a. Spiral part 81 of constant load spring 80 that applies a pressing force to brush 60 moves to the side of the commutator segment as brush 60 slides.

At this time, as illustrated in Figs. 15A, 15B, and 15C, in electric motor 2, rear end surface 62a of brush 60 and spiral part 81 of constant load spring 80 are in contact with each other at two locations. Therefore, even if spiral part 81 itself expands and contracts during movement, spiral part 81 can suppress brush 60 from moving left and right even if brush 60 wears. That is, the contact part between rear end surface 62a of brush 60 and spiral part 81 does not move left and right even if brush 60 wears.

Specifically, as illustrated in Figs. 15A, 15B, and 15C, even when brush 60 wears, the center line of spiral part 81 and the center line of brush 60 are coincide with each other without shifting. That is, spiral part 81 does not move left and right from the initial state before brush 60 wears to the final state where brush 60 wears.

Therefore, by constant load spring 80 in which the difference between the initial pressure and the final pressure is reduced, even if brush 60 wears, a constant pressing force can be continuously applied to brush 60. That is, a stable load can be continuously applied to brush 60. This can suppress a decrease in efficiency of electric motor 2 and a decrease in life of brush 60.

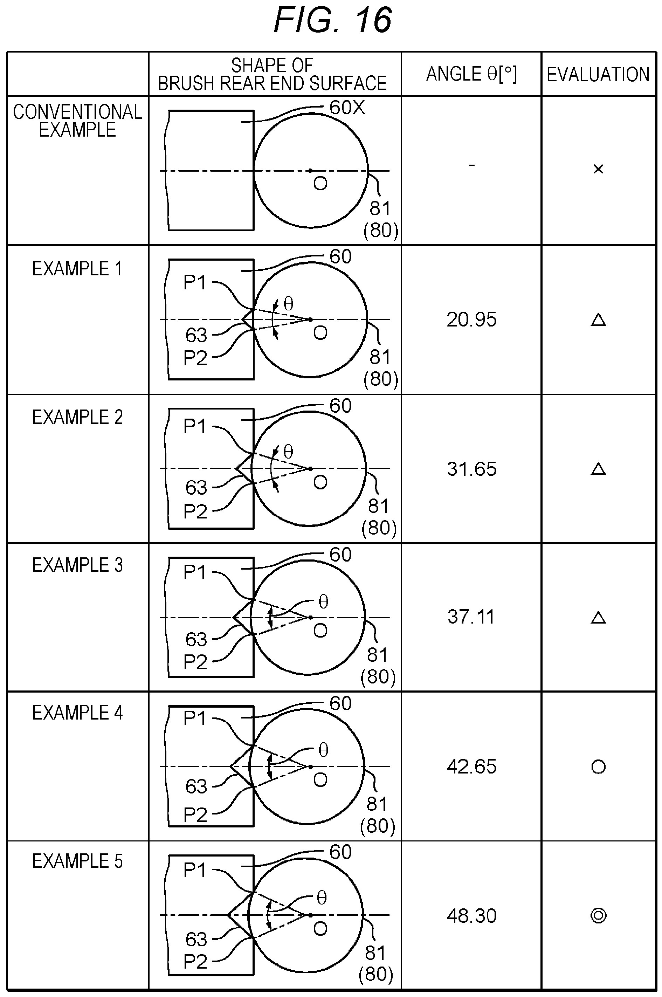

Here, an experiment was conducted regarding the relation between the groove width of recess 63 of the V shaped groove formed on rear end surface 62a of brush 60 and the left-and-right movement of spiral part 81 of constant load spring 80. The experimental result will be described with reference to Fig. 16. Fig. 16 is a view illustrating the experimental result on the relation between the groove width of recess 63 of the V shaped groove and the left-and-right movement of spiral part 81 of constant load spring 80.

In this experiment, five types of brush 60 of Examples 1 to 5 in which the groove width of recess 63 was varied, and brush 60X of a conventional example having a flat rear end surface were prepared, and the left-and-right movement of spiral part 81 of constant load spring 80 during sliding of brushes 60 and 60X was evaluated.

Constant load spring 80 having spiral part 81 having a diameter φ of 5.50 mm was used. The groove width of recess 63, which is a V shaped groove, was evaluated by angle θ between two points at which the inner surface of recess 63 and spiral part 81 were in contact with each other and the center of spiral part 81. Angle θ is a center angle with first point P1 and second point P2 as a chord in a circle centered on center O of spiral part 81. In this case, first point P1 and second point P2 are contact points between spiral part 81 and recess 63 in a cross-section taken along a plane orthogonal to the direction of axial center C of rotary shaft 13.

As a result, regarding brush 60X of the conventional example, as brush 60X slides, spiral part 81 largely moves left and right.

On the other hand, as for brush 60 (θ = 20.95°, groove width 1.0 mm) of Example 1, although spiral part 81 did not largely move left and right, spiral part 81 came off from recess 63, and spiral part 81 moved left and right in some cases.

As for brush 60 (θ = 31.65°, groove width 1.5 mm) of Example 2 and brush 60 (θ = 37.11°, groove width 1.75 mm) of Example 3, similarly to brush 60 of Example 1, although spiral part 81 did not largely move left and right, spiral part 81 came off from recess 63, and spiral part 81 moved left and right in some cases.

As for brush 60 (θ = 42.65°, groove width 2.0 mm) of Example 4, when brush 60 was slid several times, spiral part 81 occasionally moved left and right, but spiral part 81 did not come off from recess 63.

As for brush 60 (θ = 48.30°, groove width 2.25 mm) of Example 5, no matter how many times brush 60 was slid, spiral part 81 did not move left and right, and spiral part 81 did not come off from recess 63.

From the above experimental result, in order to keep applying a stable load to brush 60 by constant load spring 80, θ ≥ 40° is preferable, and θ ≥ 48° is more preferable. In particular, θ ≥ 48.30° is preferable.

As described above, electric motor 2 according to the present exemplary embodiment includes rotor 10 that includes rotary shaft 13 and commutator 14 mounted to rotary shaft 13, brush 60 that includes first end in contact with commutator 14 and second end 62 positioned on the side opposite to first end 61, and constant load spring 80 including a strip-shaped wire material and configured to press brush 60 against commutator 14. Constant load spring 80 has spiral part 81 around which the strip-shaped wire material is wound, and spiral part 81 and second end 62 are in contact with each other at two or more locations.

Due to this, even when constant load spring 80 is used, a stable load can be applied to brush 60. Therefore, it is possible to suppress a decrease in efficiency of electric motor 2 and a decrease in life of brush 60.

It is preferable that in electric motor 2, second end 62 includes recess 63, and spiral part 81 is in contact with recess 63 at two or more locations.

It is preferable that spiral part 81 and second end 62 are in contact with each other at two points of the first point and the second point in a cross-section taken along a plane orthogonal to the axial center direction of rotary shaft 13, and a line connecting the first point and the second point is parallel to the direction orthogonal to the longitudinal direction of brush 60.

It is preferable that in a circle centered on the center of spiral part 81, when the center angle with the first point and the second point as a chord is θ, θ ≥ 40° is preferable.

It is preferable that in a circle centered on the center of spiral part 81, when the center angle with the first point and the second point as a chord is θ, θ ≥ 48° is more preferable.

Electric motor 2 further includes brush holder 70 that holds brush 60, brush holder 70 includes a tubular part having a tubular shape surrounding brush 60, constant load spring has fold-back structure 82 in which one end drawn out from spiral part 81 is bent in such a way as to be folded back outward, fold-back structure 82 includes first fold-back part 82a in which the one end is folded back outward, and opposing part 82b opposing to first fold-back part 82a, and constant load spring 80 is fixed to the tubular part by fold-back structure 82 being inserted into opening end 71a in such a way as to sandwich opening end 71a of the tubular part with first fold-back part 82a and opposing part 82b.

First fold-back part 82a includes first slit 83a extending along the insertion direction of fold-back structure 82, brush holder 70 has protrusion 71b erected on the outer surface of the outer wall of the tubular part and extending along the insertion direction, and constant load spring 80 is fixed to the tubular part by fold-back structure 82 being inserted into opening end 71a of the tubular part and first slit 83a being inserted into protrusion 71b.

It is preferable that electric motor 2 further includes conductive wire 91 having one end connected to brush 60 and the other end connected to electrode terminal 92 that provides brush 60 with electric power, and the length of conductive wire 91 is set in such a way that constant load spring 80 applies a pressing force to brush 60 even when brush 60 is maximally worn.

### (Modification)

Electric motor 2 and electric blower 1 according to the present disclosure have been described above based on the exemplary embodiment. However, the present disclosure is not limited to the above exemplary embodiment.

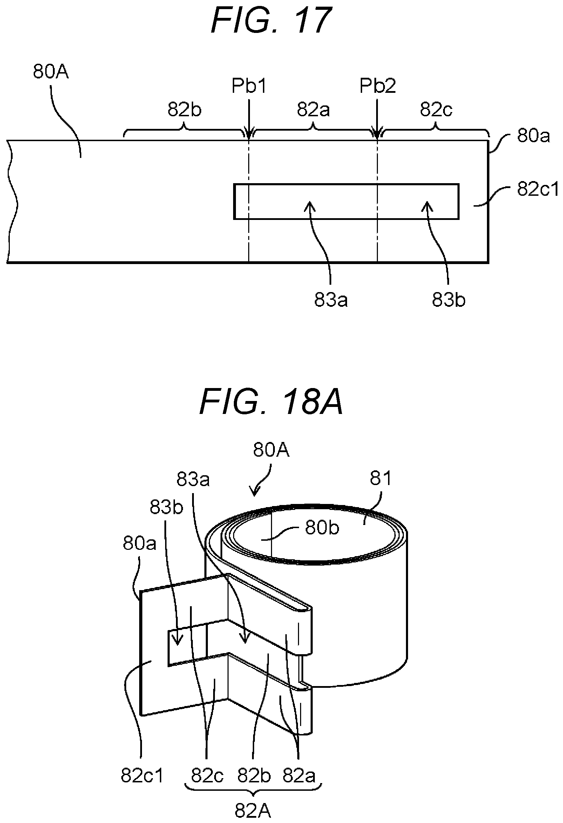

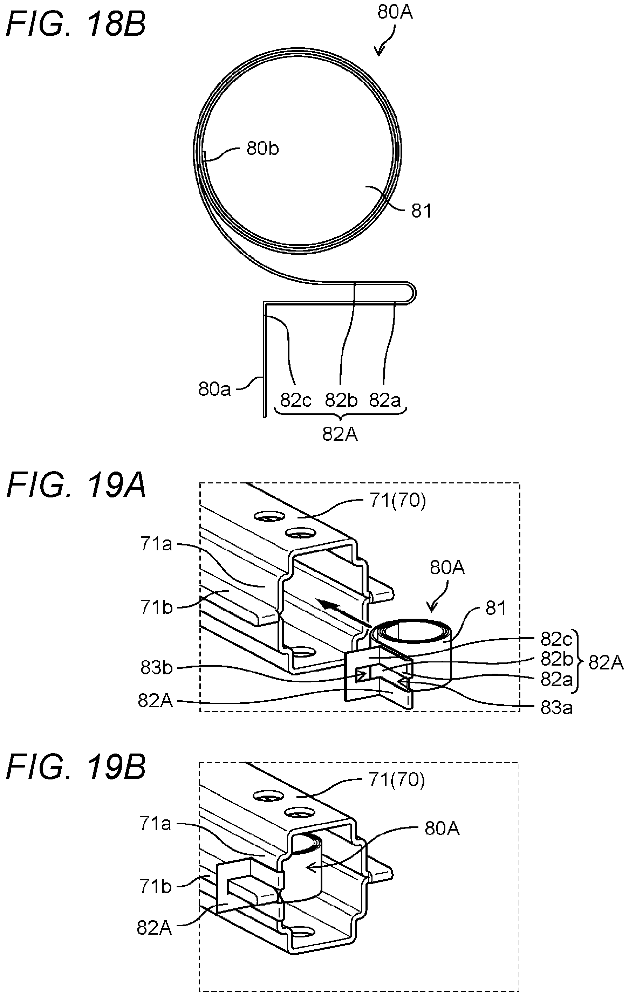

For example, fold-back structure 82 included in constant load spring 80 is not limited to the structure illustrated in Fig. 8. Specifically, in the above embodiment, as illustrated in Fig. 11, fold-back structure 82 included in constant load spring 80 is formed by the bending process applied to the metal plate provided with first slit 83a having one opening in the longitudinal direction. However, such a shape has a risk that the metal plate is deformed at the time of bending process due to insufficient strength. Therefore, as illustrated in Fig. 17, bending process is applied to a metal plate provided with a slit without one side in the longitudinal direction of the metal plate being opened. Due to this, L shaped fold-back structure 82A as illustrated in Figs. 18A and 18B may be formed. Fig. 17 is a view illustrating the shape of outer end 80a of the metal plate before being provided with the fold-back structure in constant load spring 80A according to the modification. Fig. 18A is a perspective view of constant load spring 80A according to the modification. Fig. 18B is a top view of constant load spring 80A.

As illustrated in Figs. 18A and 18B, fold-back structure 82A included in constant load spring 80A further includes second fold-back part 82c erected on first fold-back part 82a in addition to first fold-back part 82a and opposing part 82b. Second fold-back part 82c is provided with second slit 83b continuous with first slit 83a. Second slit 83b is formed without being cut out up to the tip end of second fold-back part 82c. That is, as illustrated in Figs. 17 and 18A, in fold-back structure 82A, tip ends of two narrow slips at outer end 80a are not separated and are coupled at bridge 82c1.

Fold-back structure 82A configured as described above can be formed by a bending process being applied in such a way as to fold back the metal plate illustrated in Fig. 17 outward by 180 degrees at first fold-back position Pb1 and being applied in such a way as to fold back the metal plate onto the opposite side by 90 degrees at second fold-back position Pb2. At this time, the tip end of outer end 80a is not separated, and the tip ends of the two narrow slips at outer end 80a are coupled at bridge 82c1. Therefore, it is possible to suppress the metal plate during bending processing from deforming.

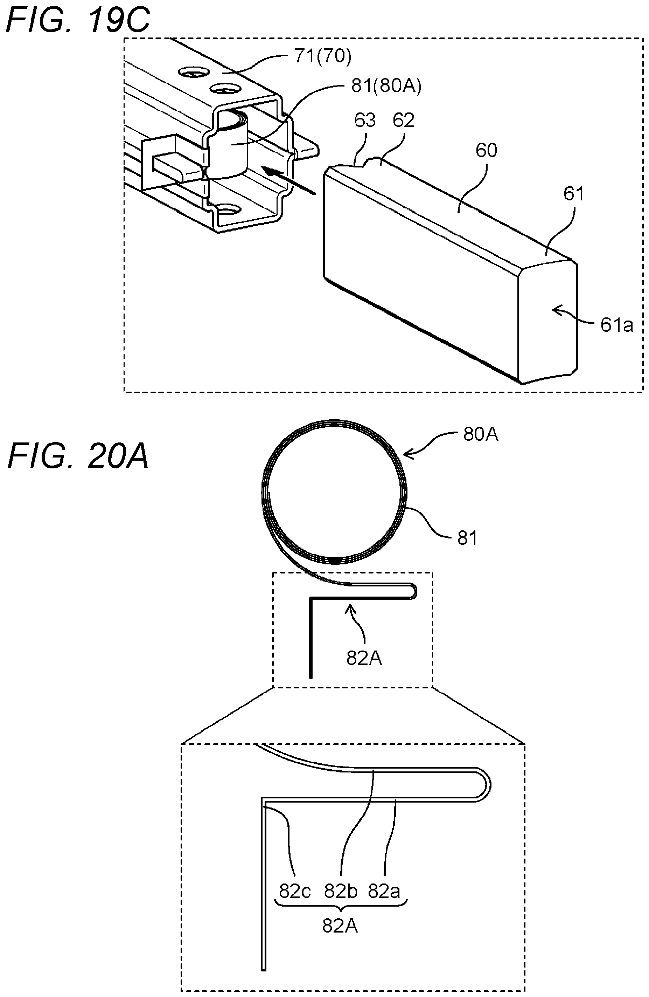

As illustrated in Figs. 19A, 19B, and 19C, constant load spring 80A prepared in this manner can fix constant load spring 80A to first holder 71 by inserting fold-back structure 82A into opening end 71a of first holder 71. Figs. 19A, 19B, and 19C are views for describing a state when constant load spring 80A and brush 60 according to the modification are incorporated in brush holder 70. Specifically, as illustrated in Figs. 19A and 19B, fold-back structure 82A of constant load spring 80A is inserted into opening end 71a of first holder 71, and first slit 83a and second slit 83b of constant load spring 80A are inserted into protrusion 71b. At this time, opening end 71a of first holder 71 is sandwiched between first fold-back part 82a and opposing part 82b of fold-back structure 82A. Due to this, constant load spring 80A is set in the front part of first holder 71 in a state where outer end 80a is fixed to first holder 71.

As described above, constant load spring 80A is fixed to first holder 71 using not only fold-back structure 82A but also first slit 83a and second slit 83b. By inserting protrusion 71b into first slit 83a and second slit 83b, it is possible to suppress first fold-back part 82a constituting first slit 83a and second fold-back part 82c constituting second slit 83b from moving in the up-and-down direction (the direction of axial center C of rotary shaft 13) by protrusion 71b. This can suppress constant load spring 80A from moving in the up-and-down direction as compared with constant load spring 80 in the above-described embodiment. Therefore, it is possible to fix constant load spring 80A to brush holder 70 in a more stable state.

After constant load spring 80A is fixed to brush holder 70, brush 60 is inserted into brush holder 70 as illustrated in Fig. 19C. Specifically, brush 60 is inserted into the back side of first holder 71 while rear end 62 of brush 60 is pressed against spiral part 81 of constant load spring 80A. Due to this, brush 60 is accommodated in first holder 71 in a state of being biased by the spring elastic force of spiral part 81 of constant load spring 80A.

Fig. 20A is a view illustrating the configuration of constant load spring 80A according to the modification. In constant load spring 80A, as illustrated in Fig. 20A, a metal plate was bent by 180 degrees, thereby forming fold-back structure 82A having first fold-back part 82a and opposing part 82b. That is, the fold-back angle of fold-back structure 82A at first fold-back part 82a and opposing part 82b is 180 degrees.

Such a configuration allows constant load spring 80A to be easily mounted to first holder 71 by fold-back structure 82A. However, meanwhile constant load spring 80A can be easily mounted, constant load spring 80A has a risk of easily coming off from first holder 71. For example, when fold-back structure 82A is brought into an inclined state, fold-back structure 82A easily comes off from opening end 71a of first holder 71. In this regard, constant load spring 80A can be suppressed from easily coming off by incorporating brush 60 with conductive wire 91, but there is a risk that constant load spring 80A comes off before brush 60 with conductive wire 91 is incorporated.

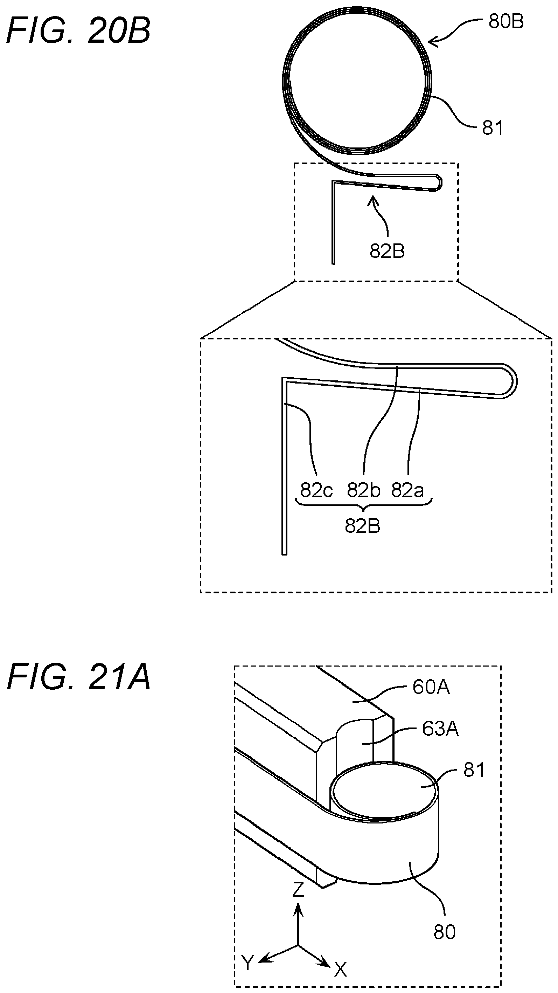

Fig. 20B is a view illustrating the configuration of constant load spring 80B according to the modification. Therefore, it is preferable that as in constant load spring 80B illustrated in Fig. 20B, in fold-back structure 82B, the gap between first fold-back part 82a and opposing part 82b is narrowed as a distance from the fold-back position of fold-back structure 82B increases. Specifically, the gap between first fold-back part 82a and opposing part 82b gradually narrows as being away from the connection part between first fold-back part 82a and opposing part 82b. It is preferable that for example, the fold-back angle of fold-back structure 82B at first fold-back part 82a and opposing part 82b is more than or equal to 181° and less than or equal to 185°.

As described above, by narrowing the gap between first fold-back part 82a and opposing part 82b as a distance from the fold-back position of fold-back structure 82B increases, it is possible to sandwich opening end 71a of first holder 71 between first fold-back part 82a and opposing part 82b using the spring elastic force by a plate spring of first fold-back part 82a and opposing part 82b in fold-back structure 82B. Therefore, by inserting fold-back structure 82B into opening end 71a of first holder 71, it is possible to temporarily hold or temporarily fix constant load spring 80B to brush holder 70. The configuration of first fold-back part 82a and opposing part 82b in fold-back structure 82B may be applied to constant load spring 80 in the above-described embodiment.

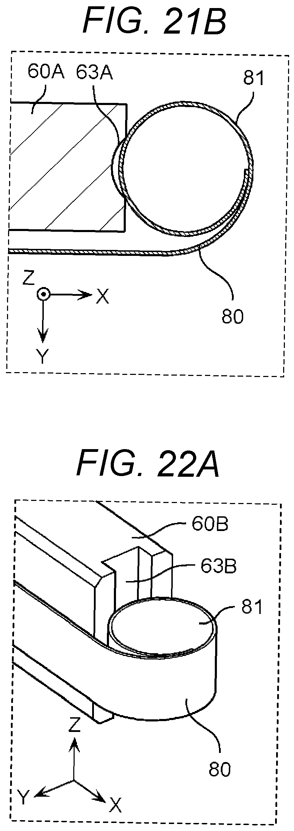

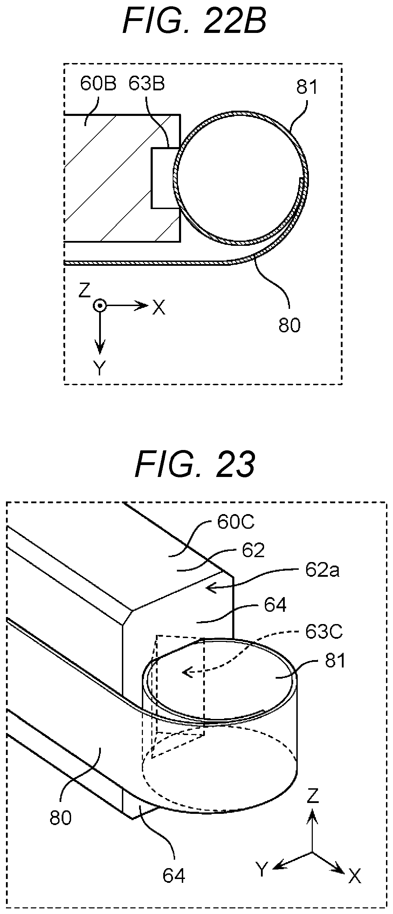

In the above exemplary embodiment, the shape of recess 63 of brush 60 is a V shaped groove in which a cross-sectional shape of the cutout part is triangular, but the present disclosure is not limited to this. Figs. 21A and 21B are enlarged views of a contact part between brush 60A and constant load spring 80 according to the modification. For example, as illustrated in Figs. 21A and 21B, recess 63A of brush 60A may be an arc groove. In this case, as illustrated in Fig. 21B, recess 63A has an arc shape in a cross-section (XY cross-section) taken along a plane orthogonal to the direction of axial center C of rotary shaft 13. Fig. 22A is an enlarged view of the contact part between brush 60B and constant load spring 80 according to the modification. Fig. 22B is an enlarged view of the contact part between brush 60B and constant load spring 80 according to the modification. Alternatively, as illustrated in Figs. 22A and 22B, recess 63B of brush 60B may be a rectangular groove having a cutout part whose cross-sectional shape is rectangular. In this case, as illustrated in Fig. 22B, recess 63B has a backwards C shape in a cross-section (XY cross-section) taken along a plane orthogonal to the direction of axial center C of rotary shaft 13. The shape of the recess of the brush is not limited to these shapes. In a cross-section (XY cross-section) taken along a plane orthogonal to the direction of axial center C of rotary shaft 13, the recess of the brush may have a shape having a curve such as a U shape, a C shape, or a parabolic shape, a shape having a plurality of straight lines such as a polygonal shape such as a trapezoidal shape, or a shape having one or more curves and one or more straight lines. As illustrated in Figs. 21A and 21B, in a case where recess 63A is an arc groove, it is preferable that the curvature of the arc of recess 63A is larger than the curvature of the circle constituting spiral part 81 in order for recess 63A and spiral part 81 to come into contact with each other at two locations.

As described above, in a cross-section taken along a plane orthogonal to the axial center direction of rotary shaft 13, recess 63 of the present exemplary embodiment may have a V shape, an arc shape, a U shape, or a backwards C shape.

Fold-back structure 82 may further include second fold-back part 82c erected on first fold-back part 82a, second fold-back part 82c includes second slit 83b continuous with first slit 83a, and second slit 83b may be without being cut out up to the tip end of second fold-back part 82c.

It is preferable that the gap between first fold-back part 82a and opposing part 82b narrows as a distance from the fold-back position of fold-back structure 82 increases.

In the exemplary embodiment described above, spiral part 81 of constant load spring 80 and rear end 62 of brush 60 are in contact with each other only at two locations, but the present disclosure is not limited to this. For example, spiral part 81 of constant load spring 80 and rear end 62 of brush 60 may be in contact with each other at three or more locations such as three locations or four locations. As described above, spiral part 81 and rear end 62 are in contact with each other at three or more locations, whereby a more stable load can be applied to brush 60 as compared with that in the above exemplary embodiment. In this case, spiral part 81 and rear end 62 may be in contact at three or more locations not in only one cross-section in the XY cross-section but in a plurality of cross-sections in the XY cross-section. For example, spiral part 81 and rear end 62 may be in contact with each other at only two locations in one cross-section of the XY cross-section as in the above-described embodiment, and may be in contact with each other at one or more locations in another one or more cross-sections in the XY cross-section. In this case, the cutout part of the recess formed in the rear end surface of brush 60 needs not have the same cross-sectional shape along the direction of axial center C of rotary shaft 13.

In the exemplary embodiment described above, recess 63 of brush 60 is formed in such a way as to cut out the entirety in the direction (Z axis direction) of axial center C of rotary shaft 13 on rear end surface 62a, but the present disclosure is not limited to this. Fig. 23 is an enlarged view of the contact part between brush 60C and constant load spring 80 according to the modification. For example, as illustrated in Fig. 23, recess 63C of brush 60C may be provided in the direction of axial center C of rotary shaft 13 on rear end surface 62a in such a way as to be partially cut out. That is, recess 63C may be formed only in a part where spiral part 81 of constant load spring 80 abuts. In this case, rear end 62 of brush 60C is provided with restriction part 64 that restricts spiral part 81 of constant load spring 80 from moving in the direction of axial center C (Z axis direction) of rotary shaft 13. By providing the restriction parts 64 above and below spiral part 81 in this manner, it is possible to suppress spiral part 81 from moving in the up-and-down direction (Z axis direction). Therefore, it is possible to apply a more stable load to brush 60C as compared with electric motor 2 in the above exemplary embodiment. Therefore, it is possible to further suppress a decrease in efficiency of the electric motor and a decrease in life of the brush. When the upper and lower surfaces of spiral part 81 are in contact with restriction part 64, not only spiral part 81 can be suppressed from moving in the up-and-down direction, but also spiral part 81 can be further suppressed from moving in left and right during sliding of brush 60C. This can apply a more stable load to brush 60C. In the present modification, restriction part 64 is a part where rear end surface 62a of brush 60C is not cut out when recess 63C is formed, but the present invention is not limited to this. For example, restriction part 64 may be formed in such a way as to protrude outward from rear end surface 62a. In Fig. 23, restriction part 64 is provided on each of above and below spiral part 81, but restriction part 64 may be provided only on one of above and below spiral part 81.

As described above, second end 62 of the present exemplary embodiment may include restriction part 64 that restricts spiral part 81 from moving in the axial center direction of rotary shaft 13.

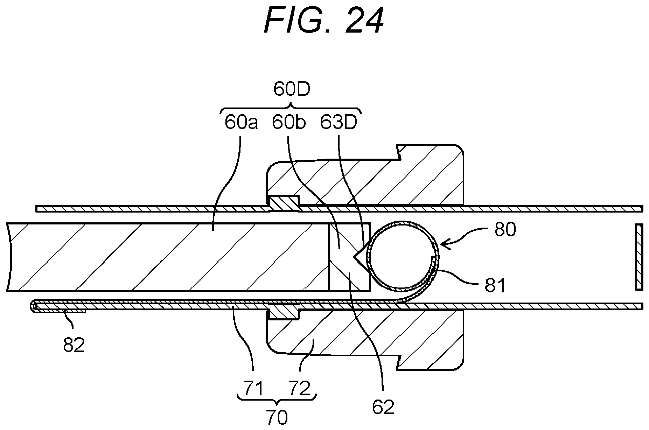

In the above exemplary embodiment, brush 60 only includes a carbon brush. Recess 63 is formed on the rear end surface of the carbon brush. However, the present disclosure is not limited to this. Recess 63 may include a carbon brush serving as a conductive brush body and a plurality of other separate components. Fig. 24 is a cross-sectional view illustrating a state where brush 60D according to the modification and constant load spring 80 are accommodated in brush holder 70. For example, as illustrated in Fig. 24, brush 60D may include carbon brush 60a and mounting component 60b mounted to the rear end of carbon brush 60a. In this case, rear end 62 of brush 60D is a rear end of mounting component 60b. Accordingly, recess 63D of brush 60D is provided at the rear end of mounting component 60b. The material of mounting component 60b may be a metal material or a resin material, or may be the same material as that of carbon brush 60a.

As described above, brush 60 of the present exemplary embodiment may include carbon brush 60a and mounting component 60b mounted to the rear end of carbon brush 60a, and second end 62 may be the rear end of mounting component 60b.

In the above embodiment, stator 20 includes magnet 21. However, the present disclosure is not limited to this. For example, stator 20 may include a stator core and a winding coil wound around the stator core.

In the above embodiment, a case where electric blower 1 is used for a vacuum cleaner has been described. However, the present disclosure is not limited to this. For example, electric blower 1 may be used for a hand dryer and the like.

In the above embodiment, an example in which electric motor 2 is used for electric blower 1 has been described. However, the present invention is not limited to this, and electric motor 2 may be used for electric equipment other than electric blower 1. Not limited to a case of use for home electric equipment, electric motor 2 may be used for industrial equipment.

### INDUSTRIAL APPLICABILITY

The electric motor, the electric blower, and the like of the present disclosure can be used in various electric equipment including home electric equipment such as a vacuum cleaner.

### REFERENCE MARKS IN THE DRAWINGS

1: electric blower
2: electric motor
3: rotary fan
4: air guide
4a: main body
4b: ring shape part
4c: coupling plate
5: fan case
5a: lid
5b: side wall portion
5c: inlet port
10: rotor
11: rotor iron core
12: winding coil
13: rotary shaft
13a: first site
13b: second site
14: commutator
14a: commutator segment
15: first bearing
16: second bearing
20: stator
21: magnet
30: yoke
40: frame
40a: opening
40b: exhaust port
41: bulge
50: bracket
51: first through hole
52: second through hole
60, 60A, 60B, 60C, 60D: brush
60a: carbon brush
60b: mounting component
61: front end (first end)
61a: front end surface
62: rear end (second end)
62a: rear end surface
63, 63A, 63B, 63C, 63D: recess
64: restriction part
70: brush holder
71: first holder
71a: opening end
71b: protrusion
72: second holder
72a: fitting hole
72b: screw hole
80, 80A, 80B: constant load spring
80a: outer end
80b: inner end
81: spiral part
82, 82A, 82B: fold-back structure
82a: first fold-back part
82b: opposing part
82c: second fold-back part
82c1: bridge part
83a: first slit
83b: second slit
91: conductive wire
92: electrode terminal
100: screw

## Claims

1. An electric motor (2) comprising:
a rotor (10) including a rotary shaft (13) and a commutator (14) mounted to the rotary shaft (13);
a brush (60) including a first end (61) in contact with the commutator (14) and a second end (62) positioned on a side opposite to the first end (61); and
a constant load spring (80) including a strip-shaped wire material and configured to press the brush (60) against the commutator (14), wherein
the constant load spring (80) includes a spiral part (81) around which the strip-shaped wire material is wound, and
the spiral part (81) and the second end (62) are in contact with each other at two or more locations, **characterized in that**
the brush (60) is held in a brush holder (70),
the brush holder (70) includes a tubular part (71) having a tubular shape surrounding the brush (60),
the constant load spring (80) has a fold-back structure (82) in which one end (80a) drawn out from the spiral part (81) is bent to be folded back outward,
the fold-back structure (82) includes a first fold-back part (82a) in which the one end (80a) is folded back outward, and an opposing part (82b) opposing to the first fold-back part (82a),
the constant load spring (80) is fixed to an opening end (71a) of the tubular part (71) by the fold-back structure (82) being inserted into the opening end (71a) of the brush holder to cause the first fold-back part (82a) and the opposing part (82b) to sandwich the opening end (71a) of the tubular part (71),
the brush holder (70) accommodates the constant load spring (80) together with the brush (60) in the tubular part (71).
the first fold-back part (82a) includes a first slit (83a) extending along an insertion direction of the fold-back structure (82),
the brush holder (70) has a protrusion (71b) erected on an outer surface of an outer wall of the tubular part (71) and extending along the insertion direction, and
the constant load spring (80) is fixed to the tubular part (71) by the fold-back structure (82) being inserted into an opening end (71a) of the tubular part (71) and the first slit (83a) being inserted into the protrusion (71b).

2. The electric motor (2) according to Claim 1, wherein
the second end (62) includes a recess (63), and
the spiral part (81) is in contact with the recess (63) at two or more locations.

3. The electric motor (2) according to Claim 2, wherein in a cross-section taken along a plane orthogonal to an axial center direction of the rotary shaft (13) , the recess (63) has a V shape, an arc shape, a U shape, or a backwards C shape.

4. The electric motor (2) according to any one of Claims 1 to 3, wherein
in the cross-section taken along the plane orthogonal to the axial center direction of the rotary shaft (13), the spiral part (81) and the second end (62) are in contact with each other at two points of a first point (P1) and a second point (P2), and
a line connecting the first point (P1) and the second point (P2) is parallel to a direction orthogonal to a longitudinal direction of the brush (60).

5. The electric motor (2) according to Claim 4, wherein in a circle centered on a center of the spiral part (81), a center angle formed by the first point (P1) and the second point (P2) as a chord is θ,
θ ≥ 40° is true.

6. The electric motor (2) according to Claim 4, wherein in a circle centered on a center of the spiral part (81), a center angle formed by the first point (P1) and the second point (P2) as a chord is θ,
θ ≥ 48° is true.

7. The electric motor (2) according to any one of Claims 1 to 6, wherein the second end (62) includes a restriction part (64) that restricts the spiral part (81) from moving in an axial center direction of the rotary shaft (13).

8. The electric motor (2) according to any one of Claims 1 to 7, wherein
the brush (60) includes a carbon brush (60a) and a mounting component (60b) mounted to a rear end of the carbon brush (60a), and
the second end (62) is a rear end of the mounting component (60b).

9. The electric motor (2) according to Claim 1, wherein
the fold-back structure (82) further includes a second fold-back part (82c) erected on the first fold-back part (82a),
the second fold-back part (82c) includes a second slit (83b) continuous with the first slit (83a), and
the second slit (83b) is without being cut out up to a tip end of the second fold-back part (82c).

10. The electric motor (2) according to Claim 1, wherein a gap between the first fold-back part (82a) and the opposing part (82b) becomes narrower as a distance from a fold-back position of the fold-back structure (82) increases.

11. The electric motor (2) according to any one of Claims 1 to 10, further comprising a conductive wire (91) having one end connected to the brush (60) and another end connected to an electrode terminal (92) that provides the brush (60) with electric power, wherein a length of the conductive wire (91) is set to cause the constant load spring (80) to apply a pressing force to the brush (60) even when the brush (60) is maximally worn.

## Patentansprüche

1. Elektromotor (2), der umfasst:
einen Rotor (10) mit einer Drehwelle (13) und einem auf der Drehwelle (13) montierten Kommutator (14);
eine Bürste (60) mit einem ersten Ende (61), das mit dem Kommutator (14) in Kontakt steht, und einem zweiten Ende (62), das auf der dem ersten Ende (61) gegenüberliegenden Seite angeordnet ist; und
eine Konstantlastfeder (80) mit einem streifenförmigen Drahtmaterial, die so konfiguriert ist, dass sie die Bürste (60) gegen den Kommutator (14) drückt, wobei
die Konstantlastfeder (80) einen spiralförmigen Teil (81) umfasst, um den das streifenförmige Drahtmaterial gewickelt ist, und
der spiralförmige Teil (81) und das zweite Ende (62) sich an zwei oder mehr Stellen berühren, **dadurch gekennzeichnet, dass**
die Bürste (60) in einem Bürstenhalter (70) gehalten wird,
der Bürstenhalter (70) ein rohrförmiges Teil (71) umfasst, das die Bürste (60) umschließt,
die Konstantlastfeder (80) eine zurück gefaltete Struktur (82) besitzt, bei der ein Ende (80a), das aus dem spiralförmigen Teil (81) herausgezogen wird, nach außen zurückgebogen wird,
die zurück gefaltete Struktur (82) ein erstes Rückfaltteil (82a) umfasst, bei dem ein Ende (80a) nach außen zurückgefaltet ist, und ein dem ersten Rückfaltteil (82a) gegenüberliegendes Teil (82b),
die Konstantlastfeder (80) an einem offenen Ende (71a) des rohrförmigen Teils (71) befestigt ist, indem die zurück gefaltete Struktur (82) in das offene Ende (71a) des Bürstenhalters eingeführt wird, sodass das erste Rückfaltteil (82a) und das gegenüberliegende Element (82b) das offene Ende (71a) des rohrförmigen Teils (71) einklemmen,
der Bürstenhalter (70) die Konstantlastfeder (80) zusammen mit der Bürste (60) im rohrförmigen Teil (71) aufnimmt,
das erste Rückfaltteil (82a) einen ersten Schlitz (83a) umfasst, der sich entlang der Einfügerichtung der zurück gefalteten Struktur (82) erstreckt,
der Bürstenhalter (70) einen Vorsprung (71b) aufweist, der auf der Außenfläche einer Außenwand des rohrförmigen Teils (71) aufgesetzt ist und sich in Einfügerichtung erstreckt,
die Konstantlastfeder (80) an dem rohrförmigen Teil (71) befestigt ist, indem die zurück gefaltete Struktur (82) in ein offenes Ende (71a) des rohrförmigen Teils (71) eingeführt wird und der erste Schlitz (83a) in den Vorsprung (71b) eingeführt wird,
das erste Rückfaltteil (82a) so ausgelegt ist, dass seine Bewegung in Richtung des axialen Mittelpunkts (C) der Drehwelle (13) durch den Vorsprung (71b) verhindert wird.

2. Elektromotor (2) nach Anspruch 1, wobei
das zweite Ende (62) eine Aussparung (63) aufweist, und
der spiralförmige Teil (81) an zwei oder mehr Stellen mit der Aussparung (63) in Kontakt steht.

3. Elektromotor (2) nach Anspruch 2, wobei die Aussparung (63) in einem Querschnitt entlang einer Ebene senkrecht zur axialen Mittelrichtung der Drehwelle (13) eine V-, eine Bogen-, eine U- oder eine umgekehrte C-Form aufweist.

4. Elektromotor (2) nach einem der Ansprüche 1 bis 3, wobei
im Querschnitt entlang der Ebene senkrecht zur axialen Mittelrichtung der Drehwelle (13) sich der spiralförmige Teil (81) und das zweite Ende (62) an zwei Punkten berühren, einem ersten Punkt (P1) und einem zweiten Punkt (P2).
eine Linie, die den ersten Punkt (P1) und den zweiten Punkt (P2) verbindet, parallel zu einer Richtung verläuft, die senkrecht zur Längsrichtung der Bürste (60) steht.

5. Elektromotor (2) nach Anspruch 4, wobei in einem Kreis um den Mittelpunkt des Spiralteils (81) der Mittelpunktswinkel, der durch die Sehne des ersten Punktes (P1) und des zweiten Punktes (P2) gebildet wird, θ beträgt,
wobei θ ≥ 40° zutrifft.

6. Elektromotor (2) nach Anspruch 4, wobei in einem Kreis um den Mittelpunkt des spiralförmigen Teils (81) der Mittelpunktswinkel, der durch den ersten Punkt (P1) und den zweiten Punkt (P2) als Sehne gebildet wird, θ beträgt,
wobei θ ≥ 48° zutrifft.

7. Elektromotor (2) nach einem der Ansprüche 1 bis 6, wobei das zweite Ende (62) ein Begrenzungsteil (64) aufweist, das die Bewegung des spiralförmigen Teils (81) in axialer Mittelrichtung der Drehwelle (13) einschränkt.

8. Elektromotor (2) nach einem der Ansprüche 1 bis 7, wobei
die Bürste (60) eine Kohlebürste (60a) und ein Befestigungselement (60b) umfasst, das an einem hinteren Ende der Kohlebürste (60a) angebracht ist, und
das zweite Ende (62) das hintere Ende des Befestigungselements (60b) ist.

9. Elektromotor (2) nach Anspruch 1, wobei
die zurück gefaltete Struktur (82) ferner ein zweites Rückfaltteil (82c) umfasst, das auf dem ersten Rückfaltteil (82a) aufgesetzt ist,
das zweite Rückfaltteil (82c) einen zweiten Schlitz (83b) aufweist, der mit dem ersten Schlitz (83a) verbunden ist, und
der zweite Schlitz (83b) nicht bis zum Ende des zweiten Rückfaltteils (82c) ausgeschnitten ist.

10. Elektromotor (2) nach Anspruch 1, wobei sich der Spalt zwischen dem ersten Rückfaltteil (82a) und dem gegenüberliegenden Teil (82b) mit zunehmendem Abstand von der Rückklappposition der zurück gefalteten Struktur (82) verringert.

11. Elektromotor (2) nach einem der Ansprüche 1 bis 10, der ferner einen leitfähigen Draht (91) umfasst, dessen eines Ende mit der Bürste (60) und dessen anderes Ende mit einem Elektrodenanschluss (92) verbunden ist, der die Bürste (60) mit elektrischer Energie versorgt, wobei die Länge des leitfähigen Drahts (91) so bemessen ist, dass die Konstantlastfeder (80) auch bei maximalem Verschleiß der Bürste (60) eine Druckkraft auf diese ausübt.

## Revendications

1. Moteur électrique (2) comprenant :
un rotor (10) comportant un arbre rotatif (13) et un collecteur (14) monté sur l'arbre rotatif (13),
un balai (60) comportant une première extrémité (61) en contact avec le collecteur (14) et une deuxième extrémité (62) positionnée du côté opposé à la première extrémité (61), et
un ressort à charge constante (80) comportant un matériau de fil métallique en forme de bande et conçu pour presser le balai (60) contre le collecteur (14) ;
le ressort à charge constante (80) comportant une partie en spirale (81) autour de laquelle le matériau de fil métallique en forme de bande est enroulé, et
la partie en spirale (81) et la deuxième extrémité (62) étant en contact l'une avec l'autre en au moins deux endroits ; **caractérisé en ce que**
le balai (60) est maintenu par un porte-balais (70),
le porte-balais (70) comporte une partie tubulaire (71) ayant une forme tubulaire entourant le balai (60),
le ressort à charge constante (80) a une structure repliée (82) dans laquelle une extrémité (80a) extraite de la partie en spirale (81) est pliée pour être rabattue vers l'extérieur,
la structure repliée (82) comporte une première partie repliée (82a) dans laquelle ladite extrémité (80a) est rabattue vers l'extérieur, et une partie opposée (82b) qui est opposée à la première partie repliée (82a),
le ressort à charge constante (80) est fixé à une extrémité d'ouverture (71a) de la partie tubulaire (71) par insertion de la structure repliée (82) dans l'extrémité d'ouverture (71a) du porte-balais pour amener la première partie repliée (82a) et la partie opposée (82b) à enserrer l'extrémité d'ouverture (71a) de la partie tubulaire (71),
le porte-balais (70) loge le ressort à charge constante (80) conjointement avec le balai (60) dans la partie tubulaire (71),
la première partie repliée (82a) comporte une première fente (83a) s'étendant le long de la direction d'insertion de la structure repliée (82),
le porte-balais (70) possède une saillie (71b) érigée sur une surface extérieure d'une paroi extérieure de la partie tubulaire (71) et s'étendant le long de la direction d'insertion, et
le ressort à charge constante (80) est fixé à la partie tubulaire (71) par insertion de la structure repliée (82) dans l'extrémité d'ouverture (71a) de la partie tubulaire (71) et par insertion de la première fente (83a) dans la saillie (71b).

2. Moteur électrique (2) selon la revendication 1, dans lequel
la deuxième extrémité (62) comporte un évidement (63), et
la partie en spirale (81) est en contact avec l'évidement (63) en au moins deux endroits.

3. Moteur électrique (2) selon la revendication 2, dans lequel, vu en section transversale prise le long d'un plan orthogonal à la direction de l'axe central de l'arbre rotatif (13), l'évidement (63) a une forme en V, une forme arquée, une forme en U ou une forme en C inversé.

4. Moteur électrique (2) selon l'une quelconque des revendications 1 à 3, dans lequel
vu en section transversale prise le long du plan orthogonal à la direction de l'axe central de l'arbre rotatif (13), la partie en spirale (81) et la deuxième extrémité (62) sont en contact l'une avec l'autre en deux points, un premier point (P1) et un deuxième point (P2), et
une ligne reliant le premier point (P1) et le deuxième point (P2) est parallèle à une direction orthogonale à la direction longitudinale du balai (60).

5. Moteur électrique (2) selon la revendication 4, dans lequel, dans un cercle centré sur un centre de la partie en spirale (81), un angle au centre θ étant formé par le premier point (P1) et le deuxième point (P2) sur la corde,
θ ≥ 40° est vérifié.

6. Moteur électrique (2) selon la revendication 4, dans lequel, dans un cercle centré sur un centre de la partie en spirale (81), un angle au centre θ étant formé par le premier point (P1) et le deuxième point (P2) sur la corde,
θ ≥ 48° est vérifié.

7. Moteur électrique (2) selon l'une quelconque des revendications 1 à 6, dans lequel la deuxième extrémité (62) comporte une partie de limitation (64) qui limite le déplacement de la partie en spirale (81) dans une direction de l'axe central de l'arbre rotatif (13).

8. Moteur électrique (2) selon l'une quelconque des revendications 1 à 7, dans lequel
le balai (60) comporte un balai de carbone (60a) et un composant de montage (60b) monté sur une extrémité arrière du balai de carbone (60a), et
la deuxième extrémité (62) est une extrémité arrière du composant de montage (60b).

9. Moteur électrique (2) selon la revendication 1, dans lequel
la structure repliée (82) comporte en outre une deuxième partie repliée (82c) érigée sur la première partie repliée (82a),
la deuxième partie repliée (82c) comporte une deuxième fente (83b) dans la continuité de la première fente (83a), et
la deuxième fente (83b) n'est pas découpée jusqu'au bout de la deuxième partie repliée (82c).

10. Moteur électrique (2) selon la revendication 1, dans lequel un écart entre la première partie repliée (82a) et la partie opposée (82b) rétrécit à mesure que la distance par rapport à une position repliée de la structure repliée (82) augmente.

11. Moteur électrique (2) selon l'une quelconque des revendications 1 à 10, comprenant en outre un fil conducteur (91) ayant une extrémité reliée au balai (60) et une autre extrémité reliée à une borne d'électrode (92) qui fournit au balai (60) de l'énergie électrique, la longueur du fil conducteur (91) étant définie pour amener le ressort à charge constante (80) à appliquer une force de pression sur le balai (60) même lorsque le balai (60) est usé au maximum.
